# EUROPEAN PATENT APPLICATION

(11) **EP 4 563 297 A1**
(43) Date of publication of application: **04.06.2025**
(21) Application number: 24202433.9
(22) Date of filing: 25.09.2024
(51) Int. Cl.: B25J 9/16, B29C 70/38, G05B 19/4099, G05B 19/4093

(54) **METHODS AND ENVIRONMENTS FOR DEVELOPING PATH PLANS FOR ROLLOUT COMPACTION OF COMPOSITE PLIES DURING COMPOSITE MANUFACTURING**

(30) Priority: 29.11.2023 US 202363603707 P; 22.01.2024 NL 2036861
(71) Applicant: The Boeing Company, Arlington, VA 22202 (US); University Of Southern California, Los Angeles, CA 90007 (US)
(72) Inventor: Johnson, Brice A., Arlington, 22202 (US); Smith, Brian J., Arlington, 22202 (US); Heng, Sangvavann, Arlington, 22202 (US); Brown, Cristopher R., Arlington, 22202 (US); Zgherea, Lisa C., Arlington, 22202 (US); Wienhold, Erik N., Arlington, 22202 (US); Fritzke, Ricardo A., Arlington, 22202 (US); Winfree, Troy, Arlington, 22202 (US); Gupta, Satyandra Kumar, Los Angeles, 90089 (US); Kanyuck, Alec Christopher, Los Angeles, 90089 (US); Minseok, Jeon, Los Angeles, 90089 (US)
(74) Representative: Arnold & Siedsma

(57) **Abstract**

A method for developing a path plan for rollout compaction of a composite ply during composite manufacturing includes receiving ply parametric data based on characteristics of a ceramic matrix composite ply for placement on a layup tool and subsequent compaction using a compaction roller during the composite manufacturing and generating the path plan for automated manipulation of the compaction roller to compact the ceramic matrix composite ply on the layup tool based at least in part on the ply parametric data. The method further comprises identifying a maximum shear for the ceramic matrix composite ply based at least in part on the ply parametric data for the ceramic matrix composite play and the tool design data, comparing the maximum shear to a predetermined threshold, and based on the comparison generating a star-based path plan for the automated manipulation of the compaction roller by a robotic device.

## Description

The present disclosure relates generally to development of path plans for rollout compaction of composite plies during composite manufacturing and, particularly, for rollout compaction of ceramic matrix composite plies. The path plans are designed for implementation using automated compaction rollers in a composite manufacturing layup cell. For example, a given path plan can be tailored to a select ceramic matrix composite ply, a select layup tool and a select orientation of the ceramic matrix composite ply on the layup tool. The path plans have applications relating to various industries and products such as aircraft as well as other types of vehicles and transportation equipment. Applications in the manufacture of various other types of products with composite parts are also contemplated.

Currently, compaction of ceramic matrix composite plies on layup tools is a manual operation performed using compaction roller hand tools. Existing manual compaction operations also include the use of sweeps, hand pressure and vacuum bags, generally ply by ply. This results in variable quality and inconsistencies in the compaction. The manual operations using the compaction roller hand tools require skilled technicians. Additionally, such manual operations are time intensive, require inspection and rework and lead to overall increased life cycle time for compaction of the ceramic matrix composite ply on the layup tool.

Malhan, RK, Kabir, AM, Shah, B, Centea, T, & Gupta, SK. "Determining Feasible Robot Placements in Robotic Cells for Composite Prepreg Sheet Layup." Proceedings of the ASME 2019 14th International Manufacturing Science and Engineering Conference. Volume 1: Additive Manufacturing; Manufacturing Equipment and Systems; Bio and Sustainable Manufacturing. Erie, Pennsylvania, USA. June 10-14, 2019 relates to high performance composites that are widely used in industry because of specific mechanical properties and lightweighting opportunities. Current automation solutions to manufacturing components from prepreg (pre-impregnated precursor material) sheets are limited. Our previous work has demonstrated the technical feasibility of a robotic cell to automate the sheet layup process. Many decisions are required for the cell to function correctly, and the time necessary to make these decisions must be reduced to utilize the cell effectively. Robot placement with respect to the mold is a significant and complex decision problem. Ensuring that robots can collaborate effectively requires addressing multiple constraints related to the robot workspace, singularity, and velocities. Solving this problem requires developing computationally efficient algorithms to find feasible robot placements in the cell. We describe an approach based on successive solution refinement strategy to identify a cell design that satisfies all constraints related to robot placement.

CAM USC Viterbi. (2020, November 27). *A Three-Arm robotic assistant for carbon fiber Prepreg layups* [Video]. YouTube. https://www.youtube.com/watch?v=8R10-1JZkko shows a smart, collaborative robotic cell for the composite layup manufacturing process. Composite manufacturing processes are highly dependent on manual labor. The use of robots to assist in manufacturing can improve the process efficiency and quality of these high-performance composite parts. Our 3 armed robotic assistant works alongside humans to aid in the production of defect-free composite parts.

CAM USC Viterbi. (2019, December 27). *Smart Robotic cell for prepreg composite sheet layup* [Video]. YouTube. https://www.youtube.com/watch?v=1ZSGQdfH2S4 relates to composite materials that are enabling innovative design concepts in many industries. The layup of composite prepreg sheets is a widely used process for making composite parts. Currently, manual process is used for laying up sheets on molds to make composite parts. This requires tedious and ergonomically challenging operations. Performing this type of operation over long periods of time can lead to serious health challenges. We have developed the next generation robotics technology to automate the sheet layup process. Multiple robots collaborate to manipulate the sheet and perform the layup task. The robotic cell is smart, and it can adapt to uncertainties during the layup process. The cell uses AI-algorithms combined with force and vision sensors to intervene and avoid defects. The system uses advanced computer vision to detect defects and calls human for assistance.

US 2018/067464 Al relates to a system for use in additively manufacturing a structure. The system may include an additive manufacturing machine, a memory having computer-executable instructions stored thereon, and a processor. The processor may be configured to execute the computer-executable instructions to cause the additive manufacturing machine to discharge a path of composite material, and to make a determination regarding existence of support located at a side of the path of composite material. The processor may be further configured to execute the computer-executable instructions to selectively cause the additive manufacturing machine to compact the path of composite material after discharge with a variable pressure that is based on the determination.

Ammar, Mohamed & Shirinzadeh, Bijan & Zhao, Pan & Shi, Yaoyao. (2020). Developing a Trajectory Planning for Curved-Contoured Surfaces for Use by 8-DoF Workcell in Robotic Fibre Placement. IOP Conference Series: Materials Science and Engineering. 859. 012018. 10.1088/1757-899X/859/1/012018 discloses that the replacement rate of conventional material by composites is increasing. Possessing high specific strength and stiffness makes composites attractive to many applications. Different techniques are being utilized for composite placement processes. Robotic Fibre Placement (RFP) is introduced as a competing approach for composite fabrication. This approach can provide many advantages; e.g. low labor cost, high performance, quick and effective process. The current work proposes an 8-DoF system established for laying the composite material. This system composed of three main units includes a 6-DoF industrial robot and two mandrel tools with different configurations. A sensory-based feedback control system is developed to manage the placement process. The placement process can be performed on two different surfaces. The end-cap surface has been fabricated then the cylindrical surface. Different geometries of pressure vessels have been generated; e.g. Oxidizer tanks that can be used in many applications such as (Hybrid rockets).

Shirinzadeh, Bijan & Foong, Chee & Tan, Boon. (2000). Robotic fibre placement process planning and control. Assembly Automation. 20. 313-320. 10.1108/01445150010353242. shows that composite materials are being used extensively in many industrial sectors. They offer excellent material properties compared to other structural materials available. However, the traditional fabrication process using manual hand lay-up is time consuming and labour intensive. Therefore, robotic fibre placement has been introduced to overcome these drawbacks. This approach may greatly reduce cycle time and manufacturing costs. This paper describes the overall strategy for the establishment of a flexible robotic fibre placement technique. The fabrication process planning of this new technique is presented. Three different types of fibre placement for open surfaces are discussed. These include simulation-based fibre path generation, fibre steering, and sensory-based contour following methodologies. The system architecture for the process control is also presented.

Accordingly, those skilled in the art continue with research and development efforts to introduce automated techniques for compaction of certain composite plies on layup tools, particularly ceramic matrix composite plies.

Disclosed are examples of methods and path planning development environments for developing path plans for rollout compaction of composite plies during composite manufacturing. The following is a non-exhaustive list of examples, which may or may not be claimed, of the subject matter according to the present disclosure.

In an example, the disclosed method for developing a path plan for rollout compaction of a composite ply during composite manufacturing includes: (1) receiving ply parametric data based on characteristics of a ceramic matrix composite ply for placement on a layup tool and subsequent compaction using a compaction roller during the composite manufacturing; and (2) generating the path plan for automated manipulation of the compaction roller to compact the ceramic matrix composite ply on the layup tool based at least in part on the ply parametric data.

In an example, the disclosed path planning development environment for developing a path plan for rollout compaction of a composite ply during composite manufacturing includes at least one computing device. The at least one computing device includes at least one processor and associated memory, a network interface, at least one application program storage device and at least one data storage device. The network interface in operative communication with the at least one processor and a communication network. The at least one application program storage device in operative communication with the at least one processor. The at least one application program storage device storing a path planning application program. The at least one data storage device in operative communication with the at least one processor. The at least one processor and the network interface are configured to receive ply parametric data based on characteristics of a ceramic matrix composite ply for placement on a layup tool and subsequent compaction using a compaction roller during the composite manufacturing. The at least one processor is configured to store the ply parametric data in the at least one data storage device. The at least one processor is configured to generate the path plan for automated manipulation of the compaction roller to compact the ceramic matrix composite ply on the layup tool based at least in part on the ply parametric data. Preferably, the path planning development environment is configured to perform one or more of the methods described herein.

In another example, the disclosed method for developing a path plan for rollout compaction of a composite ply during composite manufacturing includes: (1) selecting a ceramic matrix composite ply for which the path plan is to be developed from a plurality of ceramic matrix composite plies; (2) selecting an orientation of the ceramic matrix composite ply from a plurality of orientations; (3) selecting a layup tool for which the path plan is to be developed from a plurality of layup tools; (4) receiving ply parametric data based on characteristics of the ceramic matrix composite ply for placement on the layup tool and subsequent compaction using a compaction roller during the composite manufacturing; (5) receiving tool design data providing dimensional characteristics of a working surface for the layup tool; (6) generating the path plan for automated manipulation of the compaction roller to compact the ceramic matrix composite ply on the layup tool based at least in part on the ply parametric data and the tool design data; (7) at least temporarily storing the path plan in a path plan data file; (8) sending the path plan data file to a working path plan repository accessible to a path plan test bed, wherein the path plan test bed includes the layup tool, the ceramic matrix composite ply placed on the layup tool, a test robot control system, a robotic arm controlled by the test robot control system and an end effector on the robotic arm, wherein the end effector includes the compaction roller; (9) running a compaction application program on the test robot control system of the path plan test bed, the compaction application program using the path plan data file from the working path plan repository to compact the ceramic matrix composite ply on the layup tool; and (10) evaluating the compaction of the ceramic matrix composite ply on the layup tool to validate the path plan data file complies with predetermined requirements for the ceramic matrix composite ply and the layup tool.

Other examples of the disclosed methods and path planning development environments for developing path plans for rollout compaction of composite plies during composite manufacturing will become apparent from the following detailed description, the accompanying drawings and the appended claims.
Fig. 1 is a flow diagram of an example of a method for developing a path plan for rollout compaction of a composite ply during composite manufacturing;
Fig. 2 is a flow diagram of an example of the generating of the path plan for the method of Fig. 1;
Fig. 3, in combination with Fig. 2, is a flow diagram of another example of the generating of the path plan for the method of Fig. 1;
Fig. 4 is a flow diagram of yet another example of the generating of the path plan for the method of Fig. 1;
Fig. 5, in combination with Fig. 4, is a flow diagram of still another example of the generating of the path plan for the method of Fig. 1;
Fig. 6, in combination with Fig. 1, is a flow diagram of another example of a method for developing a path plan for rollout compaction of a composite ply during composite manufacturing;
Fig. 7, in combination with Figs. 1 and 6, is a flow diagram of yet another example of a method for developing a path plan for rollout compaction of a composite ply during composite manufacturing;
Fig. 8, in combination with Figs. 1, 6 and 7, is a flow diagram of still another example of a method for developing a path plan for rollout compaction of a composite ply during composite manufacturing;
Fig. 9, in combination with Figs. 1 and 6, is a flow diagram of still yet another example of a method for developing a path plan for rollout compaction of a composite ply during composite manufacturing;
Fig. 10, in combination with Figs. 1 and 6, is a flow diagram of another example of a method for developing a path plan for rollout compaction of a composite ply during composite manufacturing;
Fig. 11 is a functional block diagram of an example of a path planning development environment for developing a path plan for rollout compaction of a composite ply during composite manufacturing;
Fig. 12 is a functional block diagram of an example of at least one central storage device;
Fig. 13 is a functional block diagram of an example of a path plan test bed;
Fig. 14 is a functional block diagram of an example of composite manufacturing layup cell;
Figs. 15A-D are functional diagrams of examples of composite plies in which reinforcement fibers are at a zero-degree orientation, a 45-degree orientation, a 90-degree orientation and a -45-degree orientation;
Figs. 16A-B is a flow diagram of yet another example of a method for developing a path plan for rollout compaction of a composite ply during composite manufacturing;
Fig. 17 is a block diagram of aircraft production and service methodology; and
Fig. 18 is a schematic illustration of an aircraft.

Various examples of methods and path planning development environments for developing path plans for rollout compaction of composite plies during composite manufacturing are disclosed herein. The various examples provide techniques for automated robotic path planning using inputs from geometric tooling features, ply geometry and ply material specific processing parameters. The path planning techniques include identification of compaction paths and sequences, traversing fabric weave (e.g., reinforcement fibers) on first paths and potential selection of a back-and-forth yaw motion (e.g., a yaw-saw motion) for certain paths that present complex geometric tooling features. For example, the resulting path plans provide a fully automated process for ceramic matrix composites from programming to ply layup.

Various examples of the methods disclosed herein refer to composite plies. The composite plies are formed by cutting woven fabric to a desired size for the rollout compaction on a layup tool. The woven fabric can be in various weave styles. For example, the fabric may have an orthogonal weave of zero-degree and 90-degree fibers in the warp and weft directions. Where a single fiber orientation is referenced below, it is understood to refer to a primary fiber of an interwoven fabric that also includes at least one secondary fiber. The single fiber orientation described may be based on the warp fibers, the weft fibers or any directional set of interwoven fibers.

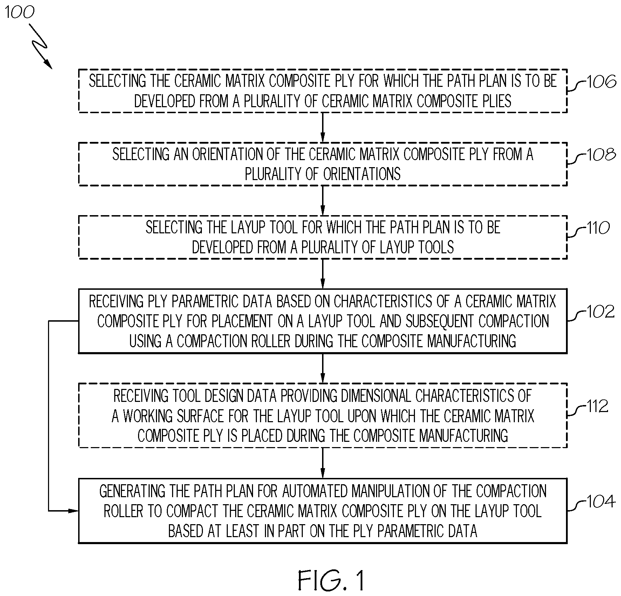

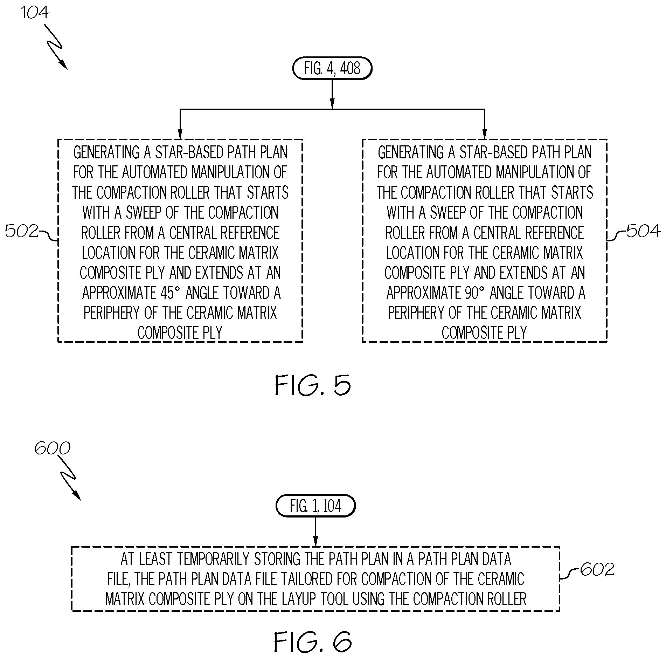

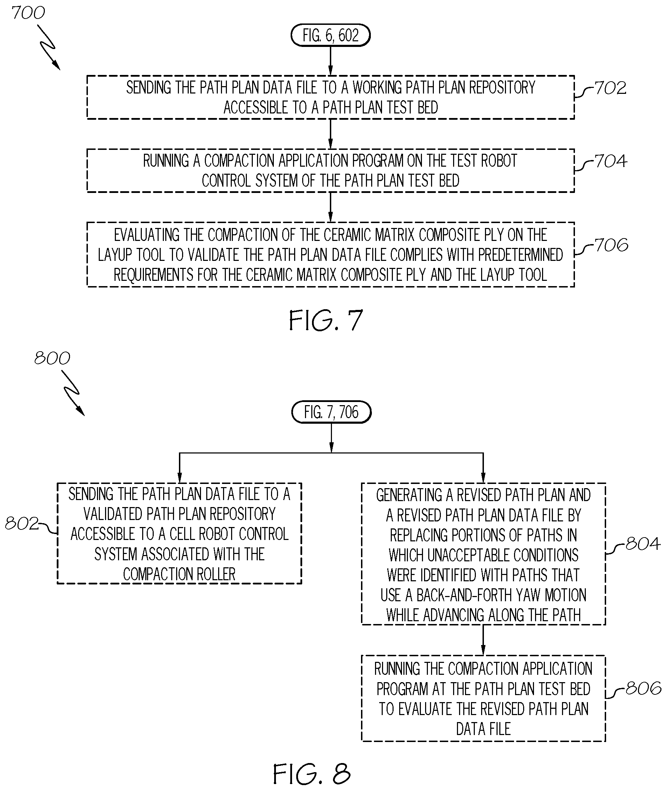

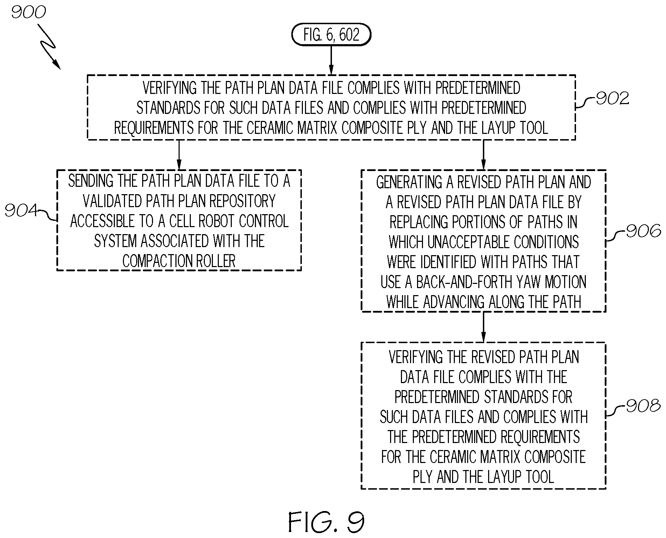

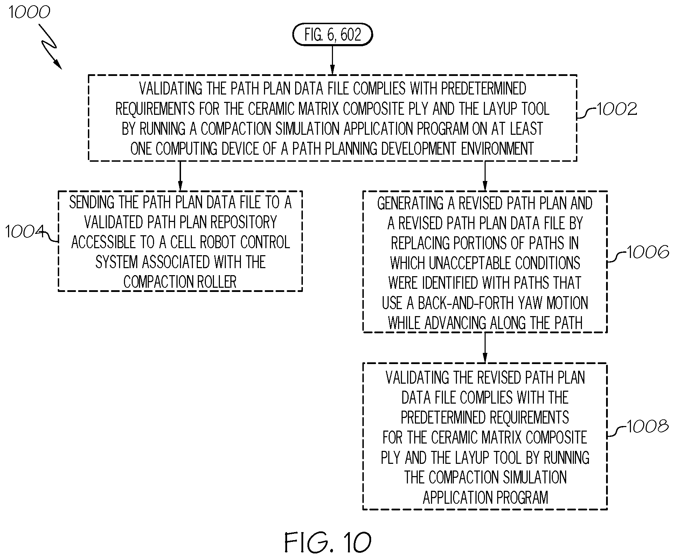

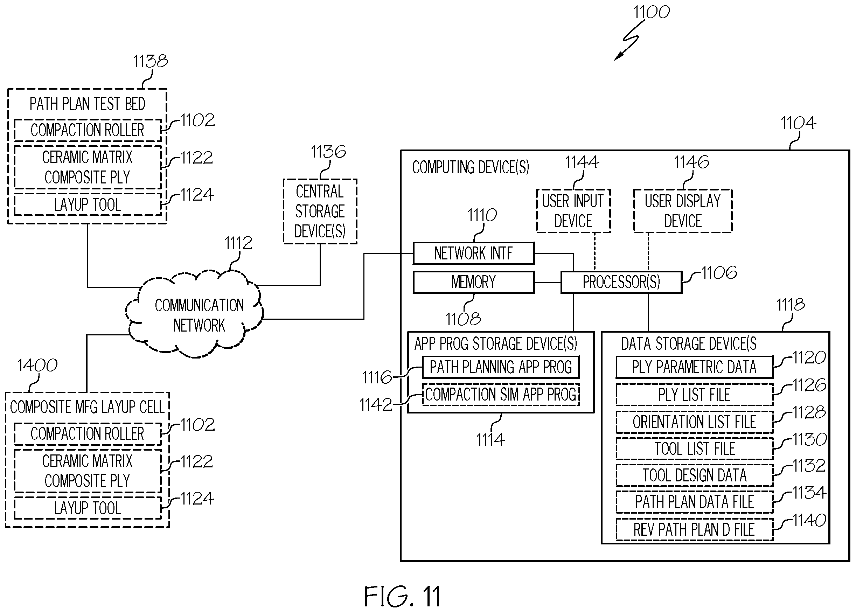

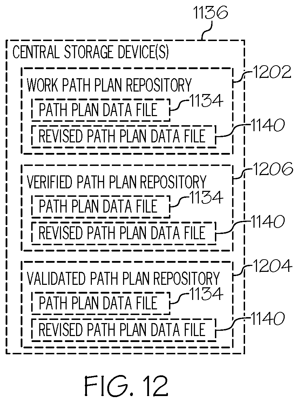

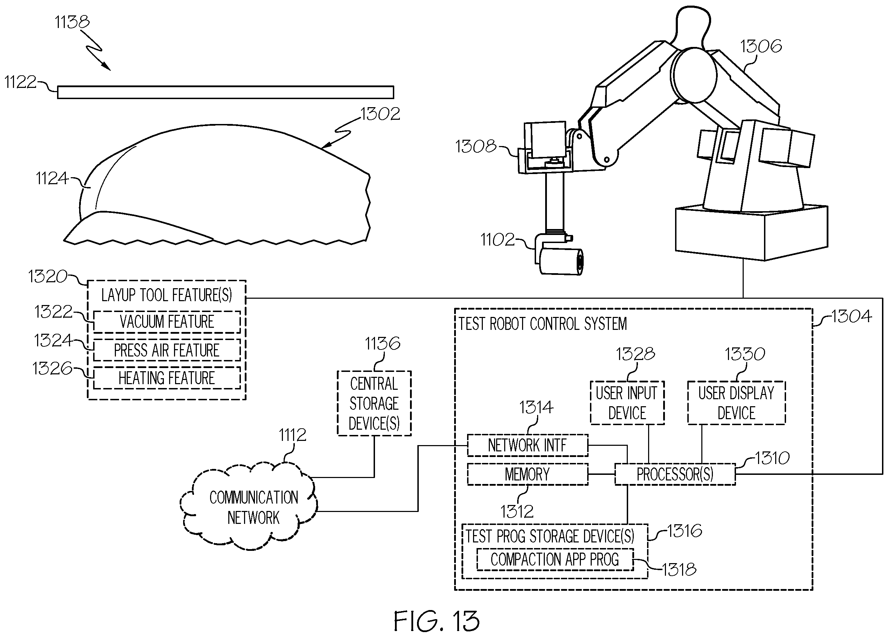

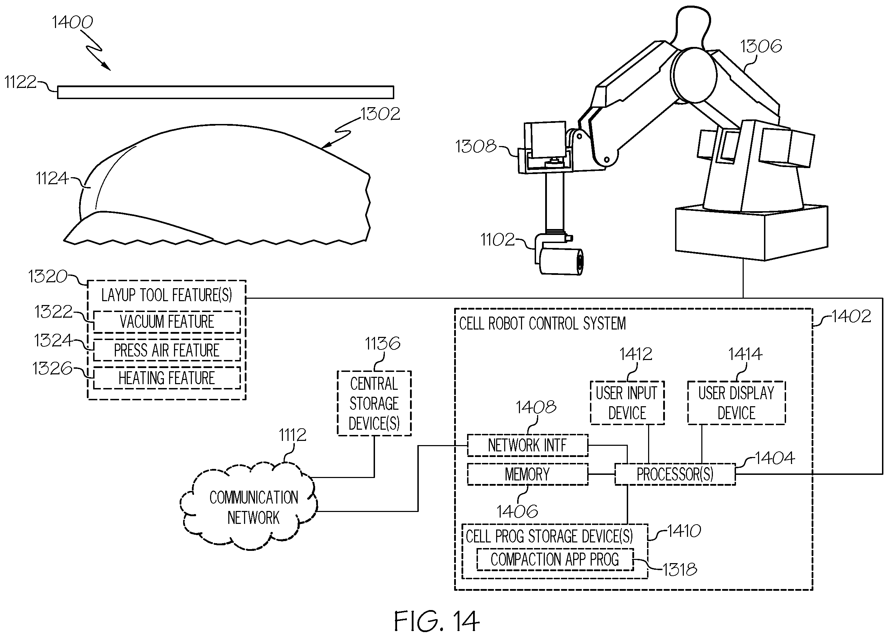

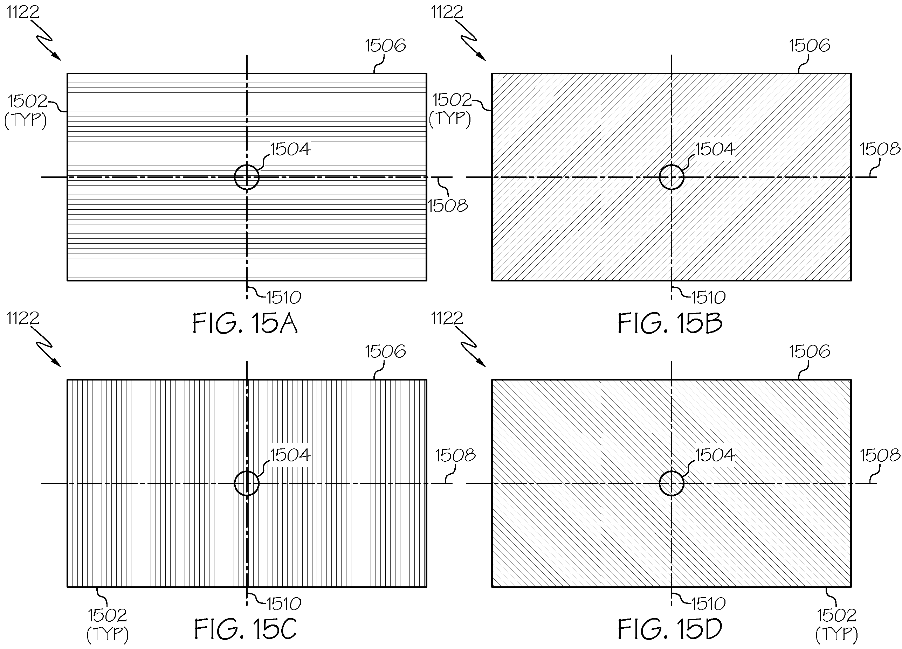

Referring generally to Figs. 1-14 and 15A-D, by way of examples, the present disclosure is directed to a method 100, 600, 700, 800, 900, 1000 for developing a path plan for rollout compaction of a composite ply during composite manufacturing. Figs. 1-5 disclose various example of method 100. Fig. 6, in combination with Fig. 1, discloses several examples of method 600. Fig. 7, in combination with Figs. 1 and 6, discloses several examples of method 700. Fig. 8, in combination with Figs. 1, 6 and 7, discloses several examples of method 800. Fig. 9, in combination with Figs. 1 and 6, discloses several examples of method 900. Fig. 10, in combination with Figs. 1 and 6, discloses several examples of method 1000. Fig. 11 discloses an example of a path planning development environment 1100 for developing a path plan for rollout compaction of a composite ply during composite manufacturing. Fig. 12 discloses an example of at least one central storage device 1136. Fig. 13 discloses an example of a path plan test bed 1138. Fig. 14 discloses an example of composite manufacturing layup cell 1400. Figs. 15A-D disclose examples of ceramic matrix composite plies 1122 in which ceramic reinforcement fibers 1502 are at a zero-degree orientation, a 45-degree orientation, a 90-degree orientation and a -45-degree orientation.

With reference again to Figs. 1-5, 11, 13 and 15, in one or more examples, a method 100 (see Fig. 1) for developing a path plan for rollout compaction of a composite ply during composite manufacturing includes receiving 102 ply parametric data 1120. The ply parametric data 1120 based on characteristics of a ceramic matrix composite ply 1122 for placement on a layup tool 1124 and subsequent compaction using a compaction roller 1102 during the composite manufacturing. At 104, the path plan is generated for automated manipulation of the compaction roller 1102 to compact the ceramic matrix composite ply 1122 on the layup tool 1124 based at least in part on the ply parametric data 1120.

In another example of the method 100, the ply parametric data 1120 includes dimensional data for the ceramic matrix composite ply 1122, geometric data for the ceramic matrix composite ply 1122, materials data for the ceramic matrix composite ply 1122, an orientation of ceramic reinforcement fibers 1502 in conjunction with placement on the layup tool 1124, characteristics of interwoven fibers within the ceramic matrix composite ply 1122, drapability characteristics of the ceramic matrix composite ply 1122, a central reference location 1504 for the ceramic matrix composite ply 1122, a longitudinal axis 1508 for the ceramic matrix composite ply 1122 intersecting the central reference location 1504, a transverse axis 1510 for the ceramic matrix composite ply 1122 intersecting the central reference location 1504, a maximum shear for the ceramic matrix composite ply 1122, a maximum angle of distortion for the ceramic matrix composite ply 1122, predetermined thresholds for the ceramic matrix composite ply 1122 relating to the ply parametric data 1120 or any other suitable type of ply parametric data in any suitable combination.

In yet another example of the method 100, the ceramic matrix composite ply 1122 includes ceramic reinforcement fibers 1502 and a ceramic matrix. In a further example, the ceramic reinforcement fibers 1502 include carbon reinforcement fibers, silicon carbide reinforcement fibers, alumina reinforcement fibers, alumina silica reinforcement fibers or any other type of ceramic reinforcement fibers in any suitable combination. In another further example, the ceramic matrix includes carbon material, silicon carbide material, alumina material, alumina silica material or any other suitable type of ceramic matrix material in any suitable combination. In yet another further example, the ceramic matrix is deposited on the ceramic reinforcement fibers 1502 to form the ceramic matrix composite.

In still another example of the method 100, the layup tool 1124 includes a working surface 1302 upon which the ceramic matrix composite ply 1122 is placed during the composite manufacturing. In a further example, the working surface 1302 of the layup tool 1124 is three-dimensional. In another further example, the working surface 1302 of the layup tool 1124 includes a curved portion, a double curved portion, a contoured portion, a geometrically-shaped portion, a rising ramp portion, a falling ramp portion, a two-dimensional portion or any other suitable shaped portion in any suitable combination.

In still yet another example of the method 100, the compaction roller 1102 includes an approximately 7.6 cm (three inch) roller, a roller having a width ranging between approximately 5.0 cm (two inches) and approximately 10.1 cm (four inches), a roller having a width ranging between approximately 12.7 cm (five inches) and approximately 17.78 cm (seven inches), a roller having a width ranging between approximately 20.3 cm (eight inches) and approximately 25.4 cm (ten inches) and a roller having a width ranging between approximately 27.9 cm (eleven inches) and approximately 33.0 cm (thirteen inches) or any other suitable compaction roller. In another example of the method 100, the compaction roller 1102 includes an automated compaction roller 1102. In yet another example of the method 100, the compaction roller 1102 includes at least a portion of an end effector 1308 for a robotic arm 1306. In still another example of the method 100, the composite manufacturing includes ceramic matrix composite manufacturing.

In still yet another example of the method 100, the automated manipulation includes maneuvering the compaction roller 1102 along the path plan using a robotic arm 1306. The compaction roller 1102 being at least a portion of an end effector 1308 on the robotic arm 1306. In another example of the method 100, the generating 104 of the path plan is performed by at least one computing device 1104 using a path planning development environment 1100 to create a path plan data file 1134 tailored for compaction of the ceramic matrix composite ply 1122 on the layup tool 1124 using the compaction roller 1102.

In yet another example, the method 100 also includes selecting 106 the ceramic matrix composite ply 1122 for which the path plan is to be developed from a plurality of ceramic matrix composite plies. At 108, an orientation of the ceramic matrix composite ply 1122 is selected from a plurality of orientations. In a further example, the plurality of orientations include a zero-degree orientation, a 45-degree orientation, a 60-degree orientation, a 90-degree orientation, a - 45-degree orientation, a -60-degree orientation or another other suitable orientation.

In still another example, the method 100 also includes selecting 110 the layup tool 1124 for which the path plan is to be developed from a plurality of layup tools. In still yet another example, the method 100 also includes receiving 112 tool design data 1132 providing dimensional characteristics of a working surface 1302 for the layup tool 1124 upon which the ceramic matrix composite ply 1122 is placed during the composite manufacturing. In this example, the generating 104 of the path plan for automated manipulation of the compaction roller 1102 is based at least in part on the tool design data 1132. In a further example, the tool design data 1132 includes a three-dimensional design model of the layup tool 1124, a three-dimensional design model of a working surface 1302 of the layup tool 1124, dimensional data for the working surface 1302, geometric data for the working surface 1302, contours of the working surface 1302, characteristics of controllable features 1320 of the layup tool 1124 or any other suitable type of design data in any suitable combination. In an even further example, the controllable features 1320 of the layup tool 1124 include a vacuum feature 1322, a pressurized air feature 1324, a heating feature 1326 or any other suitable controllable feature in any suitable combination.

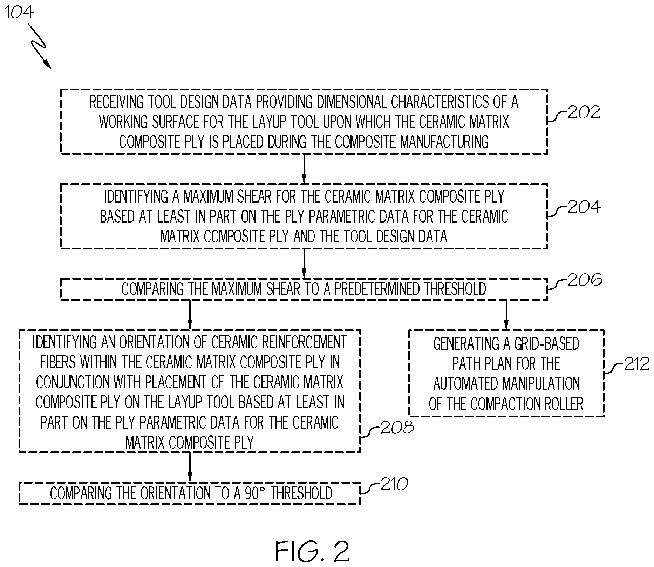

In another example of the method 100, the generating 104 of the path plan includes receiving 202 (see Fig. 2) tool design data 1132 providing dimensional characteristics of a working surface 1302 for the layup tool 1124 upon which the ceramic matrix composite ply 1122 is placed during the composite manufacturing. At 204, a maximum shear for the ceramic matrix composite ply 1122 is identified based at least in part on the ply parametric data 1120 for the ceramic matrix composite ply 1122 and the tool design data 1132. At 206, the maximum shear is compared to a predetermined threshold.

In a further example, the predetermined threshold includes a range of angular measure. In an even further example, the range of angular measure includes approximately five degrees to approximately fifteen degrees, approximately six degrees to approximately fourteen degrees, approximately seven degrees to approximately thirteen degrees, approximately eight degrees to approximately twelve degrees, approximately nine degrees to approximately eleven degrees or any other suitable range of angular measure.

In another further example, where the maximum shear is greater than the predetermined threshold, the generating 104 of the path plan also includes identifying 208 an orientation of ceramic reinforcement fibers 1502 within the ceramic matrix composite ply 1122 in conjunction with placement of the ceramic matrix composite ply 1122 on the layup tool 1124 based at least in part on the ply parametric data 1120 for the ceramic matrix composite ply 1122. At 210, the orientation of the ceramic reinforcement fibers 1502 is compared to a 90 ° threshold.

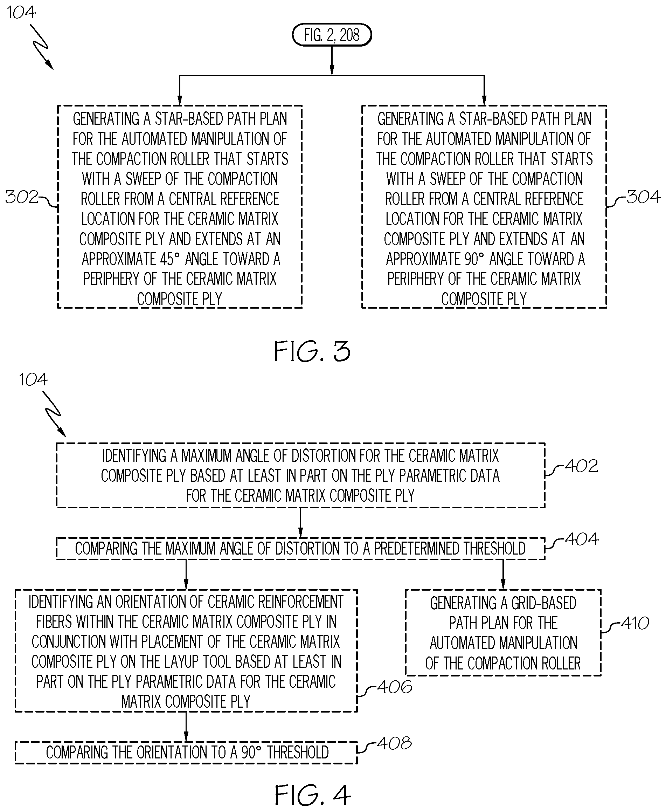

In an even further example, where the orientation of the ceramic reinforcement fibers 1502 is 90 °, the generating 104 of the path plan also includes generating 302 (see Fig. 3) a star-based path plan for the automated manipulation of the compaction roller 1102 that starts with a sweep of the compaction roller 1102 from a central reference location 1504 for the ceramic matrix composite ply 1122 and extends at an approximate 45 ° angle toward a periphery 1506 of the ceramic matrix composite ply 1122. The sweep being between a longitudinal axis 1508 of the layup tool 1124 and a transverse axis 1510 of the layup tool 1124 that intersect at the central reference location 1504 for the ceramic matrix composite ply 1122. In an even yet further example, the generating 302 of the star-based path plan continues with additional sweeps of the compaction roller 1102 from the central reference location 1504 that extend toward the periphery 1506 of the ceramic matrix composite ply 1122 at various angles until the ceramic matrix composite ply 1122 is compacted on the layup tool 1124.

In another even further example, where the orientation of the ceramic reinforcement fibers 1502 is not 90 °, the generating 104 of the path plan also includes generating 304 a star-based path plan for the automated manipulation of the compaction roller 1102 that starts with a sweep of the compaction roller 1102 from a central reference location 1504 for the ceramic matrix composite ply 1122 and extends at an approximate 90 ° angle toward a periphery 1506 of the ceramic matrix composite ply 1122. The sweep being along a longitudinal axis 1508 of the layup tool 1124 or a transverse axis 1510 of the layup tool 1124. The longitudinal axis 1508 and the transverse axis 1510 intersect at the central reference location 1504 for the ceramic matrix composite ply 1122. In an even yet further example, the generating 304 of the star-based path plan continues with additional sweeps of the compaction roller 1102 from the central reference location 1504 that extend toward the periphery 1506 of the ceramic matrix composite ply 1122 at various angles until the ceramic matrix composite ply 1122 is compacted on the layup tool 1124.

In yet another further example, where the maximum shear is not greater than the predetermined threshold, the generating 104 of the path plan also includes generating 212 (see Fig. 2) a grid-based path plan for the automated manipulation of the compaction roller 1102. The grid-based path plan includes sweeps of the compaction roller 1102 from a longitudinal axis 1508 of the ceramic matrix composite ply 1122 or a transverse axis 1510 of the ceramic matrix composite ply 1122 toward a periphery 1506 of the ceramic matrix composite ply 1122, the sweeps initially starting from a central reference location 1504 for the ceramic matrix composite ply 1122. The longitudinal axis 1508 and the transverse axis 1510 intersect at the central reference location 1504 for the ceramic matrix composite ply 1122. In an even further example, the generating 212 of the grid-based path plan continues with additional sweeps of the compaction roller 1102 along the longitudinal axis 1508 or the transverse axis 1510. The additional sweeps being toward the periphery 1506 of the ceramic matrix composite ply 1122 from various locations along the longitudinal axis 1508 or the transverse axis 1510 until the ceramic matrix composite ply 1122 is compacted on the layup tool 1124.

In yet another example of the method 100, the generating 104 of the path plan includes identifying 402 (see Fig. 4) a maximum angle of distortion for the ceramic matrix composite ply 1122 based at least in part on the ply parametric data 1120 for the ceramic matrix composite ply 1122. At 404, the maximum angle of distortion is compared to a predetermined threshold.

In a further example, the predetermined threshold includes a range of angular measure. In an even further example, the range of angular measure includes approximately five degrees to approximately fifteen degrees, approximately six degrees to approximately fourteen degrees, approximately seven degrees to approximately thirteen degrees, approximately eight degrees to approximately twelve degrees, approximately nine degrees to approximately eleven degrees or any other suitable range of angular measure.

In another further example, where the maximum angle of distortion is greater than the predetermined threshold, the generating 104 of the path plan also includes identifying 406 an orientation of ceramic reinforcement fibers 1502 within the ceramic matrix composite ply 1122 in conjunction with placement of the ceramic matrix composite ply 1122 on the layup tool 1124 based at least in part on the ply parametric data 1120 for the ceramic matrix composite ply 1122. At 408, the orientation of the ceramic reinforcement fibers 1502 is compared to a 90 ° threshold.

In an even further example, where the orientation of the ceramic reinforcement fibers 1502 is 90 °, the generating 104 of the path plan also includes generating 502 (see Fig. 5) a star-based path plan for the automated manipulation of the compaction roller 1102 that starts with a sweep of the compaction roller 1102 from a central reference location 1504 for the ceramic matrix composite ply 1122 and extends at an approximate 45 ° angle toward a periphery 1506 of the ceramic matrix composite ply 1122. The sweep being between a longitudinal axis 1508 of the layup tool 1124 and a transverse axis 1510 of the layup tool 1124 that intersect at the central reference location 1504 for the ceramic matrix composite ply 1122. In an even yet further example, the generating 502 of the star-based path plan continues with additional sweeps of the compaction roller 1102 from the central reference location 1504 that extend toward the periphery 1506 of the ceramic matrix composite ply 1122 at various angles until the ceramic matrix composite ply 1122 is compacted on the layup tool 1124.

In another even further example, where the orientation of the ceramic reinforcement fibers 1502 is not 90 °, the generating 104 of the path plan also includes generating 504 a star-based path plan for the automated manipulation of the compaction roller 1102 that starts with a sweep of the compaction roller 1102 from a central reference location 1504 for the ceramic matrix composite ply 1122 and extends at an approximate 90 ° angle toward a periphery 1506 of the ceramic matrix composite ply 1122. The sweep being along a longitudinal axis 1508 of the layup tool 1124 or a transverse axis 1510 of the layup tool 1124. The longitudinal axis 1508 and the transverse axis 1510 intersect at the central reference location 1504 for the ceramic matrix composite ply 1122. In an even yet further example, the generating 504 of the star-based path plan continues with additional sweeps of the compaction roller 1102 from the central reference location 1504 that extend toward the periphery 1506 of the ceramic matrix composite ply 1122 at various angles until the ceramic matrix composite ply 1122 is compacted on the layup tool 1124.

In yet another further example, where the maximum angle of distortion is not greater than the predetermined threshold, the generating 104 of the path plan also includes generating 410 a grid-based path plan for the automated manipulation of the compaction roller 1102. The grid-based path plan includes sweeps of the compaction roller 1102 from a longitudinal axis 1508 of the ceramic matrix composite ply 1122 or a transverse axis 1510 of the ceramic matrix composite ply 1122 toward a periphery 1506 of the ceramic matrix composite ply 1122. The sweeps initially start from a central reference location 1504 for the ceramic matrix composite ply 1122. The longitudinal axis 1508 and the transverse axis 1510 intersect at the central reference location 1504 for the ceramic matrix composite ply 1122. In an even yet further example, the generating 410 of the grid-based path plan continues with additional sweeps of the compaction roller 1102 along the longitudinal axis 1508 or the transverse axis 1510, the additional sweeps being toward the periphery 1506 of the ceramic matrix composite ply 1122 from various locations along the longitudinal axis 1508 or the transverse axis 1510 until the ceramic matrix composite ply 1122 is compacted on the layup tool 1124.

With reference again to Figs. 1, 6 and 11, in one or more examples, a method 600 (see Fig. 6) for developing a path plan for rollout compaction of a composite ply during composite manufacturing includes the method 100 (see Fig. 1) described above. In one example, the method 600 continues from 104 of Fig. 1 to 602 where the path plan is at least temporarily stored in a path plan data file 1134. The path plan data file 1134 tailored for compaction of the ceramic matrix composite ply 1122 on the layup tool 1124 using the compaction roller 1102.

With reference again to Figs. 1, 6, 7, 11 and 12, in one or more examples, a method 700 (see Fig. 7) for developing a path plan for rollout compaction of a composite ply during composite manufacturing includes the methods 100, 600 (see Figs. 1 and 6) described above. In one example, the method 600 continues from 602 of Fig. 6 to 702 where the path plan data file 1134 is sent to a working path plan repository 1202 accessible to a path plan test bed 1138. The path plan test bed 1138 includes the layup tool 1124, the ceramic matrix composite ply 1122 placed on the layup tool 1124, a test robot control system 1304, a robotic arm 1306 controlled by the test robot control system 1304 and an end effector 1308 on the robotic arm 1306. The end effector 1308 includes the compaction roller 1102. At 704, a compaction application program 1318 is run on the test robot control system 1304 of the path plan test bed 1138. The compaction application program 1318 uses the path plan data file 1134 from the working path plan repository 1202 to compact the ceramic matrix composite ply 1122 on the layup tool 1124. At 706, the compaction of the ceramic matrix composite ply 1122 on the layup tool 1124 is evaluated to validate the path plan data file 1134 complies with predetermined requirements for the ceramic matrix composite ply 1122 and the layup tool 1124. In another example of the method 700, the evaluating 706 of the compaction includes a visual inspection of the compaction, visual imaging of the compaction, analysis of the compaction, comparison of contours of the compacted ceramic matrix composite ply 1122 to contours of the layup tool 1124 or any other suitable type of evaluation in any suitable combination.

With reference again to Figs. 1, 6-8 and 11-14, in one or more examples, a method 800 (see Fig. 8) for developing a path plan for rollout compaction of a composite ply during composite manufacturing includes the methods 100, 600, 700 (see Figs. 1, 6 and 7) described above. In this example, the evaluating 706 of the compaction is successful and the method 800 continues from 706 of Fig. 7 to 802 where the path plan data file 1134 is sent to a validated path plan repository 1204 accessible to a cell robot control system 1402 of a composite manufacturing layup cell 1400. The cell robot control system 1402 is associated with the compaction roller 1102. In another example, the evaluating 706 of the compaction is not successful and the method 800 continues from 706 of Fig. 7 to 804 where a revised path plan and a revised path plan data file 1140 are generated by replacing portions of paths in which unacceptable conditions were identified with paths that use a back-and-forth yaw motion while advancing along the path. At 806, the compaction application program 1318 is run at the path plan test bed 1138 to evaluate the revised path plan data file 1140.

With reference again to Figs. 1, 6, 9, 11, 12 and 14, in one or more examples, a method 900 (see Fig. 9) for developing a path plan for rollout compaction of a composite ply during composite manufacturing includes the methods 100, 600 (see Figs. 1 and 6) described above. In one example, the method 900 continues from 602 of Fig. 6 to *902* for verification the path plan data file 1134 complies with predetermined standards for such data files and complies with predetermined requirements for the ceramic matrix composite ply 1122 and the layup tool 1124. In another example of the method 900, the verifying 902 of the path plan data file 1134 includes a visual inspection of the path plan data file 1134, processing the path plan data file 1134 for syntax errors, processing the path plan data file 1134 to confirm compliance with ceramic matrix composite ply 1122 requirements, processing the path plan data file 1134 to confirm compliance with layup tool requirements or any other suitable type of verification in any suitable combination. In yet another example, where the verifying 902 of the path plan data file 1134 is successful, the method 900 also includes sending 904 the path plan data file 1134 to a verified path plan repository 1206 accessible to a cell robot control system 1402 associated with the compaction roller 1102. In still another example, where the verifying 902 of the path plan data file 1134 is not successful, the method 900 also includes generating 906 a revised path plan and a revised path plan data file 1140 by replacing portions of paths in which unacceptable conditions were identified with paths that use a back-and-forth yaw motion while advancing along the path. At 908, the revised path plan data file 1140 is verified for compliance with the predetermined standards for such data files and compliance with the predetermined requirements for the ceramic matrix composite ply 1122 and the layup tool 1124.

With reference again to Figs. 1, 6, 10-12 and 14, in one or more examples, a method 1000 (see Fig. 10) for developing a path plan for rollout compaction of a composite ply during composite manufacturing includes the methods 100, 600 (see Figs. 1 and 6) described above. In one example, the method 1000 continues from 602 of Fig. 6 to 1002 for validation the path plan data file 1134 complies with predetermined requirements for the ceramic matrix composite ply 1122 and the layup tool 1124 by running a compaction simulation application program 1142 on at least one computing device 1104 of a path planning development environment 1100. The at least one computing device 1104 having access to the path plan data file 1134. In another example, where the validating 1002 of the path plan data file 1134 is successful, the method 1000 also includes sending 1004 the path plan data file 1134 to a validated path plan repository 1204 accessible to a cell robot control system 1402 of a composite manufacturing layup cell 1400. The cell robot control system 1402 is associated with the compaction roller 1102. In yet another example, where the validating 1002 of the path plan data file 1134 is not successful, the method 1000 also includes generating 1006 a revised path plan and a revised path plan data file 1140 by replacing portions of paths in which unacceptable conditions were identified with paths that use a back-and-forth yaw motion while advancing along the path. At 1008, the revised path plan data file 1140 is validated to comply with the predetermined requirements for the ceramic matrix composite ply 1122 and the layup tool 1124 by running the compaction simulation application program 1142.

Referring generally to Figs. 11-14 and 15A-D, by way of examples, the present disclosure is directed to a path planning development environment 1100 for developing a path plan for rollout compaction of a composite ply during composite manufacturing. Fig. 11 discloses an example of the path planning development environment 1100 for developing a path plan for rollout compaction of a composite ply during composite manufacturing. Fig. 12 discloses an example of at least one central storage device 1136. Fig. 13 discloses an example of a path plan test bed 1138. Fig. 14 discloses an example of composite manufacturing layup cell 1400. Figs. 15A-D disclose examples of ceramic matrix composite plies 1122 in which ceramic reinforcement fibers 1502 are at a zero-degree orientation, a 45-degree orientation, a 90-degree orientation and a -45-degree orientation.

With reference again to Figs. 11-14 and 15A-D, in one or more examples, a path planning development environment 1100 includes at least one computing device 1104. The at least one computing device 1104 includes at least one processor 1106 and associated memory 1108, a network interface 1110, at least one application program storage device 1114 and at least one data storage device 1118. The network interface 1110 in operative communication with the at least one processor 1106 and a communication network 1112. The at least one application program storage device 1114 in operative communication with the at least one processor 1106. The at least one application program storage device 1114 storing a path planning application program 1116. The at least one data storage device 1118 in operative communication with the at least one processor 1106. The at least one processor 1106 and the network interface 1110 are configured to receive ply parametric data 1120 based on characteristics of a ceramic matrix composite ply 1122 for placement on a layup tool 1124 and subsequent compaction using a compaction roller 1102 during the composite manufacturing. The at least one processor 1106 is configured to store the ply parametric data 1120 in the at least one data storage device 1118. The at least one processor 1106 is configured to generate the path plan for automated manipulation of the compaction roller 1102 to compact the ceramic matrix composite ply 1122 on the layup tool 1124 based at least in part on the ply parametric data 1120.

In another example of the path planning development environment 1100, the at least one data storage device 1118 stores a ply list file 1126 identifying a plurality of ceramic matrix composite plies and an orientation list file 1128 identifying a plurality of orientations for the plurality of ceramic matrix composite plies. The at least one processor 1106 is configured to select the ceramic matrix composite ply 1122 for which the path plan is to be developed from the plurality of ceramic matrix composite plies identified in the ply list file 1126. The at least one processor 1106 is configured to select an orientation of the ceramic matrix composite ply 1122 from the plurality of orientations identified in the orientation list file 1128.

In yet another example of the path planning development environment 1100, the at least one data storage device 1118 stores a tool list file 1130 identifying a plurality of layup tools. The at least one processor 1106 is configured to select the layup tool 1124 for which the path plan is to be developed from the plurality of layup tools identified in the tool list file 1130.

In still another example of the path planning development environment 1100, the at least one processor 1106 and the network interface 1110 are configured to receive tool design data 1132 providing dimensional characteristics of a working surface 1302 for the layup tool 1124 upon which the ceramic matrix composite ply 1122 is placed during the composite manufacturing. The at least one processor 1106 is configured to store the tool design data 1132 in the at least one data storage device 1118. The at least one processor 1106 is configured to generate the path plan for automated manipulation of the compaction roller 1102 based at least in part on the tool design data 1132.

In still yet another example of the path planning development environment 1100, the at least one processor 1106 and the network interface 1110 are configured to receive tool design data 1132 providing dimensional characteristics of a working surface 1302 for the layup tool 1124 upon which the ceramic matrix composite ply 1122 is placed during the composite manufacturing. In conjunction with generation of the path plan, the at least one processor 1106 is configured to: i) identify a maximum shear for the ceramic matrix composite ply 1122 based at least in part on the ply parametric data 1120 for the ceramic matrix composite ply 1122 and ii) compare the maximum shear to a predetermined threshold.

In a further example, in conjunction with the generation of the path plan, where the maximum shear is greater than the predetermined threshold, the at least one processor 1106 is configured to: i) identify an orientation of ceramic reinforcement fibers 1502 within the ceramic matrix composite ply 1122 in conjunction with placement of the ceramic matrix composite ply 1122 on the layup tool 1124 based at least in part on the ply parametric data 1120 for the ceramic matrix composite ply 1122 and ii) compare the orientation of the ceramic reinforcement fibers 1502 to a 90 ° threshold.

In an even further example, in conjunction with the generation of the path plan, where the orientation of the ceramic reinforcement fibers 1502 is 90 °, the at least one processor 1106 is configured to generate a star-based path plan for the automated manipulation of the compaction roller 1102 that starts with a sweep of the compaction roller 1102 from a central reference location 1504 for the ceramic matrix composite ply 1122 and extends at an approximate 45 ° angle toward a periphery 1506 of the ceramic matrix composite ply 1122. The sweep being between a longitudinal axis 1508 of the layup tool 1124 and a transverse axis 1510 of the layup tool 1124 that intersect at the central reference location 1504 for the ceramic matrix composite ply 1122. In an even yet further example, the at least one processor 1106 is configured to continue generating the star-based path plan with additional sweeps of the compaction roller 1102 from the central reference location 1504 that extend toward the periphery 1506 of the ceramic matrix composite ply 1122 at various angles until the ceramic matrix composite ply 1122 is compacted on the layup tool 1124.

In another even further example, in conjunction with the generation of the path plan, where the orientation of the ceramic reinforcement fibers 1502 is not 90 °, the at least one processor 1106 is configured to generate a star-based path plan for the automated manipulation of the compaction roller 1102 that starts with a sweep of the compaction roller 1102 from a central reference location 1504 for the ceramic matrix composite ply 1122 and extends at an approximate 90 ° angle toward a periphery 1506 of the ceramic matrix composite ply 1122. The sweep being along a longitudinal axis 1508 of the layup tool 1124 or a transverse axis 1510 of the layup tool 1124. The longitudinal axis 1508 and the transverse axis 1510 intersect at the central reference location 1504 for the ceramic matrix composite ply 1122. In an even yet further example, the at least one processor 1106 is configured to continue generating the star-based path plan with additional sweeps of the compaction roller 1102 from the central reference location 1504 that extend toward the periphery 1506 of the ceramic matrix composite ply 1122 at various angles until the ceramic matrix composite ply 1122 is compacted on the layup tool 1124.

In another further example, in conjunction with the generation of the path plan, where the maximum shear is not greater than the predetermined threshold, the at least one processor 1106 is configured to generate a grid-based path plan for the automated manipulation of the compaction roller 1102. The grid-based path plan including sweeps of the compaction roller 1102 from a longitudinal axis 1508 of the ceramic matrix composite ply 1122 or a transverse axis 1510 of the ceramic matrix composite ply 1122 toward a periphery 1506 of the ceramic matrix composite ply 1122. The sweeps initially start from a central reference location 1504 for the ceramic matrix composite ply 1122. The longitudinal axis 1508 and the transverse axis 1510 intersect at the central reference location 1504 for the ceramic matrix composite ply 1122. In an even further example, the at least one processor 1106 is configured to continue generating the grid-based path plan with additional sweeps of the compaction roller 1102 along the longitudinal axis 1508 or the transverse axis 1510. The additional sweeps being toward the periphery 1506 of the ceramic matrix composite ply 1122 from various locations along the longitudinal axis 1508 or the transverse axis 1510 until the ceramic matrix composite ply 1122 is compacted on the layup tool 1124.

In another example of the path planning development environment 1100, in conjunction with generation of the path plan, the at least one processor 1106 is configured to: i) identify a maximum angle of distortion for the ceramic matrix composite ply 1122 based at least in part on the ply parametric data 1120 for the ceramic matrix composite ply 1122 and ii) compare the maximum angle of distortion to a predetermined threshold.

In a further example, in conjunction with the generation of the path plan, where the maximum angle of distortion is greater than the predetermined threshold, the at least one processor 1106 is configured to: i) identify an orientation of ceramic reinforcement fibers 1502 within the ceramic matrix composite ply 1122 in conjunction with placement of the ceramic matrix composite ply 1122 on the layup tool 1124 based at least in part on the ply parametric data 1120 for the ceramic matrix composite ply 1122 and ii) compare the orientation of the ceramic reinforcement fibers 1502 to a 90 ° threshold.

In an even further example, in conjunction with the generation of the path plan, where the orientation of the ceramic reinforcement fibers 1502 is 90 °, the at least one processor 1106 is configured to generate a star-based path plan for the automated manipulation of the compaction roller 1102 that starts with a sweep of the compaction roller 1102 from a central reference location 1504 for the ceramic matrix composite ply 1122 and extends at an approximate 45 ° angle toward a periphery 1506 of the ceramic matrix composite ply 1122. The sweep being between a longitudinal axis 1508 of the layup tool 1124 and a transverse axis 1510 of the layup tool 1124 that intersect at the central reference location 1504 for the ceramic matrix composite ply 1122. In an even yet further example, the at least one processor 1106 is configured to continue generating the star-based path plan with additional sweeps of the compaction roller 1102 from the central reference location 1504 that extend toward the periphery 1506 of the ceramic matrix composite ply 1122 at various angles until the ceramic matrix composite ply 1122 is compacted on the layup tool 1124.

In another even further example, in conjunction with the generation of the path plan, where the orientation of the ceramic reinforcement fibers 1502 is not 90 °, the at least one processor 1106 is configured to generate a star-based path plan for the automated manipulation of the compaction roller 1102 that starts with a sweep of the compaction roller 1102 from a central reference location 1504 for the ceramic matrix composite ply 1122 and extends at an approximate 90 ° angle toward a periphery 1506 of the ceramic matrix composite ply 1122. The sweep being along a longitudinal axis 1508 of the layup tool 1124 or a transverse axis 1510 of the layup tool 1124. The longitudinal axis 1508 and the transverse axis 1510 intersect at the central reference location 1504 for the ceramic matrix composite ply 1122. In an even yet further example, the at least one processor 1106 is configured to continue generating the star-based path plan with additional sweeps of the compaction roller 1102 from the central reference location 1504 that extend toward the periphery 1506 of the ceramic matrix composite ply 1122 at various angles until the ceramic matrix composite ply 1122 is compacted on the layup tool 1124.

In another further example, in conjunction with the generation of the path plan, where the maximum angle of distortion is not greater than the predetermined threshold, the at least one processor 1106 is configured to generate a grid-based path plan for the automated manipulation of the compaction roller 1102. The grid-based path plan includes sweeps of the compaction roller 1102 from a longitudinal axis 1508 of the ceramic matrix composite ply 1122 or a transverse axis 1510 of the ceramic matrix composite ply 1122 toward a periphery 1506 of the ceramic matrix composite ply 1122. The sweeps initially start from a central reference location 1504 for the ceramic matrix composite ply 1122. The longitudinal axis 1508 and the transverse axis 1510 intersect at the central reference location 1504 for the ceramic matrix composite ply 1122. In an even yet further example, the at least one processor 1106 is configured to continue generating the grid-based path plan with additional sweeps of the compaction roller 1102 along the longitudinal axis 1508 or the transverse axis 1510. The additional sweeps being toward the periphery 1506 of the ceramic matrix composite ply 1122 from various locations along the longitudinal axis 1508 or the transverse axis 1510 until the ceramic matrix composite ply 1122 is compacted on the layup tool 1124.

In yet another example of the path planning development environment 1100, the at least one processor 1106 is configured to at least temporarily store the path plan in the at least one data storage device 1118 as a path plan data file 1134. The path plan data file 1134 tailored for compaction of the ceramic matrix composite ply 1122 on the layup tool 1124 using the compaction roller 1102.

In a further example, the at least one processor 1106 and the network interface 1110 are configured to send the path plan data file 1134 to a working path plan repository 1202 in at least one central storage device 1136 via the communication network 1112. The working path plan repository 1202 being accessible to a path plan test bed 1138. The path plan test bed 1138 includes the layup tool 1124, the ceramic matrix composite ply 1122 placed on the layup tool 1124, a test robot control system 1304, a robotic arm 1306 controlled by the test robot control system 1304 and an end effector 1308 on the robotic arm 1306. The end effector 1308 includes the compaction roller 1102. The test robot control system 1304 includes at least one test processor 1310 and associated memory 1312, a network interface 1314 in operative communication with the at least one test processor 1310 and at least one test program storage device 1316 in operative communication with the at least one test processor 1310. The at least one test program storage device 1316 storing a compaction application program 1318. The at least one test processor 1310 is configured to run the compaction application program 1318 on the test robot control system 1304 of the path plan test bed 1138. The compaction application program 1318 uses the path plan data file 1134 from the working path plan repository 1202 to compact the ceramic matrix composite ply 1122 on the layup tool 1124. The path plan test bed 1138 is configured for evaluating the compaction of the ceramic matrix composite ply 1122 on the layup tool 1124 to validate the path plan data file 1134 complies with predetermined requirements for the ceramic matrix composite ply 1122 and the layup tool 1124.

In an even further example, the layup tool 1124 includes a working surface 1302 upon which the ceramic matrix composite ply 1122 is placed during the composite manufacturing. In an even yet further example, the working surface 1302 of the layup tool 1124 is three-dimensional. In another even yet further example, the working surface 1302 of the layup tool 1124 includes a curved portion, a double curved portion, a contoured portion, a geometrically-shaped portion, a rising ramp portion, a falling ramp portion, a two-dimensional portion or any other suitable shaped portion in any suitable combination.

In another even further example, the compaction roller 1102 includes an approximately 7.6 cm (three inch) roller, a roller having a width ranging between approximately 5.0 cm (two inches) and approximately 10.1 cm (four inches), a roller having a width ranging between approximately 12.7 cm (five inches) and approximately 17.78 cm (seven inches), a roller having a width ranging between approximately 20.3 cm (eight inches) and approximately 25.4 cm (ten inches) and a roller having a width ranging between approximately 27.9 cm (eleven inches) and approximately 33.0 cm (thirteen inches) or any other suitable compaction roller. In yet another even further example, where the evaluating of the compaction is successful, the test robot control system 1304 is configured to send the path plan data file 1134 from the working path plan repository 1202 to a validated path plan repository 1204 accessible to a cell robot control system 1402 of a composite manufacturing layup cell 1400. The cell robot control system 1402 is associated with the compaction roller 1102. In still another even further example, where the evaluating of the compaction is not successful, the test robot control system 1304 is configured to notify the at least one computing device 1104 of the path planning development environment 1100 that the evaluating of the compaction was not successful. The at least one computing device 1104 is configured to run the path planning application program 1116 to generate a revised path plan and a revised path plan data file 1140 by replacing portions of paths in which unacceptable conditions were identified with paths that use a back-and-forth yaw motion while advancing along the path. The at least one computing device 1104 is configured to send the revised path plan data file 1140 to the working path plan repository 1202 in the at least one central storage device 1136 via the communication network 1112. The test robot control system 1304 is configured to run the compaction application program 1318 at the path plan test bed 1138 to evaluate the revised path plan data file 1140.

In another further example, the at least one computing device 1104 is configured for verifying the path plan data file 1134 complies with predetermined standards for such data files and complies with predetermined requirements for the ceramic matrix composite ply 1122 and the layup tool 1124. The at least one computing device 1104 having access to the path plan data file 1134. In an even further example, where the verifying of the path plan data file 1134 is successful, the at least one computing device 1104 is configured to send the path plan data file 1134 to a verified path plan repository 1206 accessible to a cell robot control system 1402 of a composite manufacturing layup cell 1400. The robot control system 1402 is associated with the compaction roller 1102. In another even further example, where the verifying of the path plan data file 1134 is not successful, the at least one computing device 1104 is configured to generate a revised path plan and a revised path plan data file 1140 by replacing portions of paths in which unacceptable conditions were identified with paths that use a back-and-forth yaw motion while advancing along the path. The at least one computing device 1104 is configured to verify the revised path plan data file 1140.

In yet another further example, the at least one computing device 1104 is configured for validating the path plan data file 1134 complies with predetermined requirements for the ceramic matrix composite ply 1122 and the layup tool 1124 by running a compaction simulation application program 1142 on the at least one computing device 1104. The at least one computing device 1104 having access to the path plan data file 1134. In an even further example, where the validating of the path plan data file 1134 is successful, the at least one computing device 1104 is configured to send the path plan data file 1134 to a validated path plan repository 1204 accessible to a cell robot control system 1402 of a composite manufacturing layup cell 1400. The cell robot control system 1402 is associated with the compaction roller 1102. In another even further example, where the validating of the path plan data file 1134 is not successful, the at least one computing device 1104 is configured to generate a revised path plan and a revised path plan data file 1140 by replacing portions of paths in which unacceptable conditions were identified with paths that use a back-and-forth yaw motion while advancing along the path. The at least one computing device 1104 is configured to validate the revised path plan data file 1140 complies with predetermined requirements for the ceramic matrix composite ply 1122 and the layup tool 1124 by the at least one processor 1106 running the compaction simulation application program 1142.

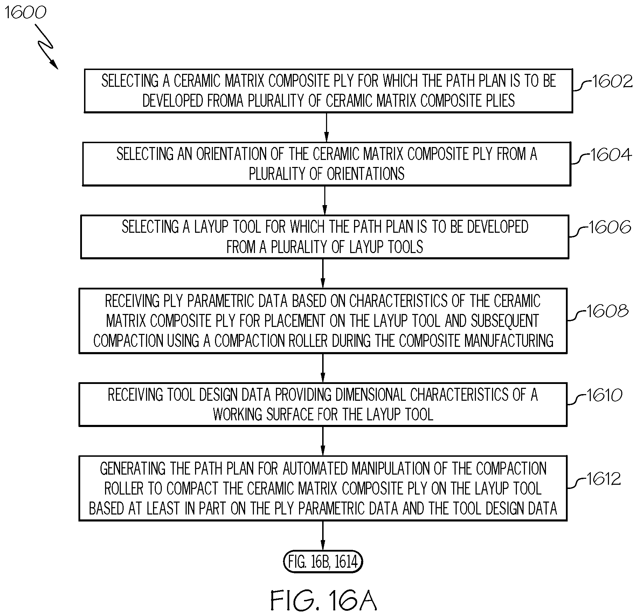

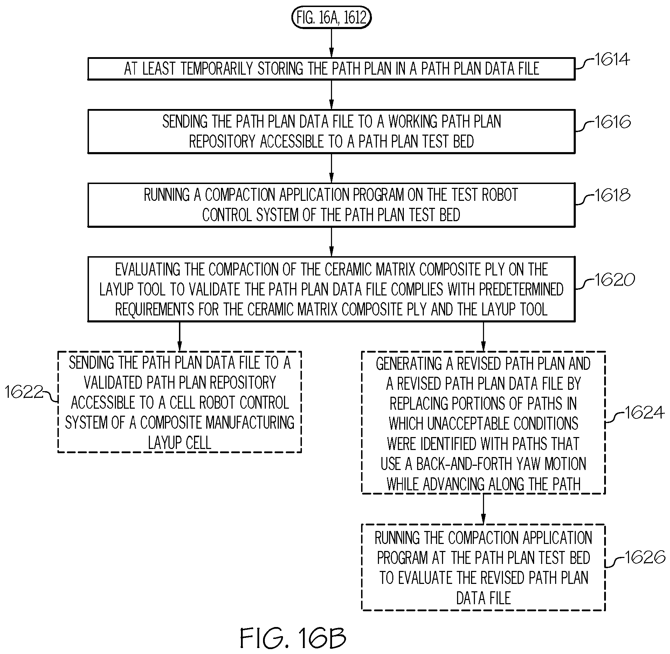

Referring generally to Figs. 11-14 and 16A-B, by way of examples, the present disclosure is directed to a method 1600 for developing a path plan for rollout compaction of a composite ply during composite manufacturing. Figs. 16A-B disclose several examples of method 1600. Fig. 11 discloses an example of a path planning development environment 1100 for developing a path plan for rollout compaction of a composite ply during composite manufacturing. Fig. 12 discloses an example of at least one central storage device 1136. Fig. 13 discloses an example of a path plan test bed 1138. Fig. 14 discloses an example of composite manufacturing layup cell 1400.

With reference again to Figs. 11-14 and 16A-B, in one or more examples, a method 1600 for developing a path plan for rollout compaction of a composite ply during composite manufacturing includes selecting 1602 a ceramic matrix composite ply 1122 for which the path plan is to be developed from a plurality of ceramic matrix composite plies. At 1604, an orientation of the ceramic matrix composite ply 1122 is selected from a plurality of orientations. At 1606, a layup tool 1124 for which the path plan is to be developed is selected from a plurality of layup tools. At 1608, ply parametric data 1120 is received. The ply parametric data 1120 is based on characteristics of the ceramic matrix composite ply 1122 for placement on the layup tool 1124 and subsequent compaction using a compaction roller 1102 during the composite manufacturing. At 1610, tool design data 1132 is received. The tool design data 1132 provides dimensional characteristics of a working surface (1302) for the layup tool (1124). At 1612, the path plan for automated manipulation of the compaction roller 1102 to compact the ceramic matrix composite ply 1122 on the layup tool 1124 is generated based at least in part on the ply parametric data 1120 and the tool design data 1132. At 1614, the path plan is at least temporarily stored in a path plan data file 1134. At 1616, the path plan data file 1134 is sent to a working path plan repository 1202 accessible to a path plan test bed 1138. The path plan test bed 1138 includes the layup tool 1124, the ceramic matrix composite ply 1122 placed on the layup tool 1124, a test robot control system 1304, a robotic arm 1306 controlled by the test robot control system 1304 and an end effector 1308 on the robotic arm 1306. The end effector 1308 includes the compaction roller 1102. At 1618, a compaction application program 1318 is run on the test robot control system 1304 of the path plan test bed 1138. The compaction application program 1318 uses the path plan data file 1134 from the working path plan repository 1202 to compact the ceramic matrix composite ply 1122 on the layup tool 1124. At 1620, the compaction of the ceramic matrix composite ply 1122 on the layup tool 1124 is evaluated to validate the path plan data file 1134 complies with predetermined requirements for the ceramic matrix composite ply 1122 and the layup tool 1124.

In another example of the method 1600, the evaluating 1620 of the compaction includes a visual inspection of the compaction, visual imaging of the compaction, analysis of the compaction, comparison of contours of the compacted ceramic matrix composite ply 1122 to contours of the layup tool 1124 or another other suitable evaluating technique in any suitable combination.

In yet another example, where the evaluating 1620 of the compaction is successful, the method 1600 also includes sending 1622 the path plan data file 1134 to a validated path plan repository 1204 accessible to a cell robot control system 1402 of a composite manufacturing layup cell 1400. The cell robot control system 1402 is associated with the compaction roller 1102.

In still another example, where the evaluating 1620 of the compaction is not successful, the method 1600 also includes generating 1624 a revised path plan and a revised path plan data file 1140 by replacing portions of paths in which unacceptable conditions were identified with paths that use a back-and-forth yaw motion while advancing along the path. At 1626, the compaction application program 1318 is run at the path plan test bed 1138 to evaluate the revised path plan data file 1140.

With reference again to Fig. 11, the at least one computing device 1104 may also include a user input device 1144 and/or a user display device 1146. With reference again to Fig. 13, the test robot control system 1304 may also include a user input device 1328 and/or a user display device 1330. With reference again to Fig. 14, the cell robot control system 1402 may include a at least one cell processor 1404 and associated memory 1406, a network interface 1408, at least one cell program storage device 1410, a cell user input device 1412 and a user display device 1414 in any suitable combination. The at least one cell program storage device 1410 may store the compaction application program 1318. The composite manufacturing layup cell 1400 may also include the robotic arm 1306 and the end effector 1308.

Examples of methods 100, 600, 700, 800, 900, 1000, 1600, path planning development environments 1100, central storage devices 1136 and path plan test beds 1138 for developing a path plan for rollout compaction of a composite ply during composite manufacturing may be related to or used in the context of aircraft design and manufacture. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to methods for analysis of fastened structures in the design and manufacture of various types of vehicles and in the design and construction of various types of transportation structures.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provide above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, control system, device, computing device, processor, structure, article, element, component, or hardware "configured to" perform a specified function is indeed capable of performing the specified function without any alteration, rather than merely having potential to perform the specified function after further modification. In other words, the system, apparatus, device, control system, computing device, processor, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, control system, device, computing device, processor, structure, article, element, component, or hardware that enable the system, apparatus, control system, device, computing device, processor, structure, article, element, component, or hardware to perform the specified function without further modification. For purposes of this disclosure, a system, apparatus, device, control system, device, computing device, processor, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1-10 and 16A-B, referred to above, the blocks may represent operations, steps, and/or portions thereof, and lines connecting the various blocks do not imply any particular order or dependency of the operations or portions thereof. It will be understood that not all dependencies among the various disclosed operations are necessarily represented. Figs. 1-10 and 16A-B and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Figs. 11-14 and 15A-D, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 11-14 and 15A-D, referred to above, need be included in every example and not all elements, features, and/or components described herein are necessarily depicted in each illustrative example. Accordingly, some of the elements, features, and/or components described and illustrated in Figs. 11-14 and 15A-D may be combined in various ways without the need to include other features described and illustrated in Figs. 11-14 and 15A-D, other drawing figures, and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 11-14 and 15A-D, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 11-14 and 15A-D, and such elements, features, and/or components may not be discussed in detail herein with reference to each of Figs. 11-14 and 15A-D. Similarly, all elements, features, and/or components may not be labeled in each of Figs. 11-14 and 15A-D, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

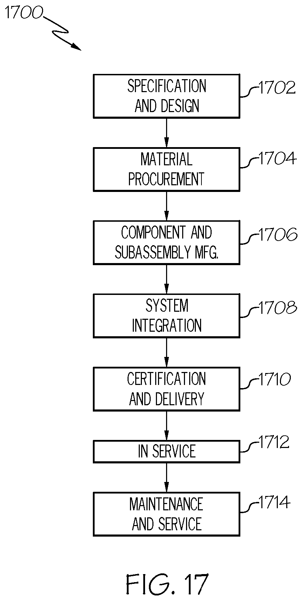

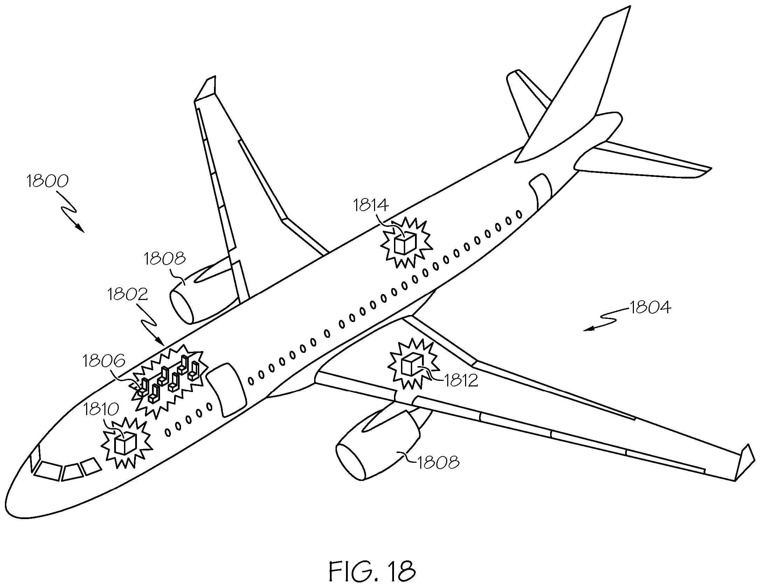

Examples of the subject matter disclosed herein may be described in the context of aircraft manufacturing and service method 1700 as shown in Fig. 17 and aircraft 1800 as shown in Fig. 18. In one or more examples, the disclosed methods and systems for analysis of fastened structures may be used in aircraft manufacturing. During pre-production, the service method 1700 may include specification and design (block 1702) of aircraft 1800 and material procurement (block 1704). During production, component and subassembly manufacturing (block 1706) and system integration (block 1708) of aircraft 1800 may take place. Thereafter, aircraft 1800 may go through certification and delivery (block 1710) to be placed in service (block 1712). While in service, aircraft 1800 may be scheduled for routine maintenance and service (block 1714). Routine maintenance and service may include modification, reconfiguration, refurbishment, etc. of one or more systems of aircraft 1800.

Each of the processes of the service method 1700 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 18, aircraft 1800 produced by the service method 1700 may include airframe 1802 with a plurality of high-level systems 1804 and interior 1806. Examples of high-level systems 1804 include one or more of propulsion system 1808, electrical system 1810, hydraulic system 1812, and environmental system 1814. Any number of other systems may be included. Although an aerospace example is shown, the principles disclosed herein may be applied to other industries, such as the automotive industry. Accordingly, in addition to aircraft 1800, the principles disclosed herein may apply to other vehicles, e.g., land vehicles, marine vehicles, space vehicles, etc.

The disclosed methods and systems for analysis of fastened structures may be employed during any one or more of the stages of the manufacturing and service method 1700. For example, components or subassemblies corresponding to component and subassembly manufacturing (block 1706) may be fabricated or manufactured in a manner similar to components or subassemblies produced while aircraft 1800 is in service (block 1712). Also, one or more examples of the tooling set(s), system(s), method(s), or any combination thereof may be utilized during production stages (block 1706 and block 1708), for example, by substantially expediting assembly of or reducing the cost of aircraft 1800. Similarly, one or more examples of the tooling set, system or method realizations, or a combination thereof, may be utilized, for example and without limitation, while aircraft 1800 is in service (block 1712) and/or during maintenance and service (block 1714).

A developing method (100, 600, 700, 800, 900, 1000) for a path plan for rollout compaction of a composite ply (1122) during composite manufacturing according to one of the embodiments of the application (e.g. see Figs. 1-2) comprises the steps of receiving (102) ply parametric data (1120) based on characteristics of a ceramic matrix composite ply for placement on a layup tool and subsequent compaction using a compaction roller during the composite manufacturing, and generating (104) the path plan for automated manipulation of the compaction roller to compact the ceramic matrix composite ply (1122) on the layup tool based at least in part on the ply parametric data (1120).

The ply parametric data (1120) preferably comprise at least one of dimensional data for the ceramic matrix composite ply, geometric data for the ceramic matrix composite ply, materials data for the ceramic matrix composite ply, an orientation of ceramic reinforcement fibers in conjunction with placement on the layup tool, characteristics of interwoven fibers within the ceramic matrix composite ply, drapability characteristics of the ceramic matrix composite ply, a central reference location for the ceramic matrix composite ply, a longitudinal axis for the ceramic matrix composite ply intersecting the central reference location, a transverse axis for the ceramic matrix composite ply intersecting the central reference location, a maximum shear for the ceramic matrix composite ply, a maximum angle of distortion for the ceramic matrix composite ply and predetermined thresholds for the ceramic matrix composite ply relating to the ply parametric data.

The ceramic matrix composite ply may comprise ceramic reinforcement fibers and a ceramic matrix, wherein the ceramic reinforcement fibers may comprise at least one of carbon reinforcement fibers, silicon carbide reinforcement fibers, alumina reinforcement fibers and alumina silica reinforcement fibers. The ceramic matrix may comprise at least one of carbon material, silicon carbide material, alumina material and alumina silica material. The ceramic matrix may be deposited on the ceramic reinforcement fibers to form the ceramic matrix composite.

The layup tool may comprise a working surface upon which the ceramic matrix composite ply is placed during the composite manufacturing, wherein preferably the working surface of the layup tool is three-dimensional, and/or wherein the working surface of the layup tool comprises at least one of a curved portion, a double curved portion, a contoured portion, a geometrically-shaped portion, a rising ramp portion, a falling ramp portion and a two-dimensional portion.

The compaction roller may comprise at least one of an approximately 7.6 cm (three inch) roller, a roller having a width ranging between approximately 5.0 cm (two inches) and approximately 10.1 cm (four inches), a roller having a width ranging between approximately 12.7 cm (five inches) and approximately 17.78 cm (seven inches), a roller having a width ranging between approximately 20.3 cm (eight inches) and approximately 25.4 cm (ten inches) and a roller having a width ranging between approximately 27.9 cm (eleven inches) and approximately 33.0 cm (thirteen inches).

In addition, the compaction roller may comprise an automated compaction roller, and/or the compaction roller may comprise at least a portion of an end effector for a robotic arm, and/or the composite manufacturing comprises ceramic matrix composite manufacturing.

Optionally, the automated manipulation comprises maneuvering the compaction roller along the path plan using a robotic arm, the compaction roller being at least a portion of an end effector on the robotic arm. In a further option, the generating of the path plan is performed by at least one computing device using a path planning development environment to create a path plan data file tailored for compaction of the ceramic matrix composite ply on the layup tool using the compaction roller.

In addition, the method may comprise selecting the ceramic matrix composite ply for which the path plan is to be developed from a plurality of ceramic matrix composite plies, and selecting an orientation of the ceramic matrix composite ply from a plurality of orientations, wherein preferably the plurality of orientations comprise at least one of a zero-degree orientation, a 45-degree orientation, a 60-degree orientation, a 90-degree orientation, a -45-degree orientation and a -60-degree orientation.

The method may comprise selecting the layup tool for which the path plan is to be developed from a plurality of layup tools, and/or further comprise receiving tool design data providing dimensional characteristics of a working surface for the layup tool upon which the ceramic matrix composite ply is placed during the composite manufacturing, and wherein the generating of the path plan for automated manipulation of the compaction roller is based at least in part on the tool design data, wherein as a further option the tool design data comprise at least one of a three-dimensional design model of the layup tool, a three-dimensional design model of a working surface of the layup tool, dimensional data for the working surface, geometric data for the working surface, contours of the working surface and characteristics of controllable features of the layup tool. In a further option, the controllable features of the layup tool comprise at least one of a vacuum feature, a pressurized air feature and a heating feature.

Advantageously, the generating of the path plan comprises receiving tool design data providing dimensional characteristics of a working surface for the layup tool upon which the ceramic matrix composite ply is placed during the composite manufacturing, identifying a maximum shear for the ceramic matrix composite ply based at least in part on the ply parametric data for the ceramic matrix composite ply and the tool design data, and comparing the maximum shear to a predetermined threshold, wherein optionally the predetermined threshold comprises a range of angular measure, and as a further option the range of angular measure comprises at least one of approximately five degrees to approximately fifteen degrees, approximately six degrees to approximately fourteen degrees, approximately seven degrees to approximately thirteen degrees, approximately eight degrees to approximately twelve degrees and approximately nine degrees to approximately eleven degrees. In such a method the maximum shear is preferably greater than the predetermined threshold, the generating of the path plan further comprising, identifying an orientation of ceramic reinforcement fibers within the ceramic matrix composite ply in conjunction with placement of the ceramic matrix composite ply on the layup tool based at least in part on the ply parametric data for the ceramic matrix composite ply, and comparing the orientation of the ceramic reinforcement fibers to a 90 ° threshold. Optionally, the orientation of the ceramic reinforcement fibers is 90 °, the generating of the path plan further comprising generating a star-based path plan for the automated manipulation of the compaction roller that starts with a sweep of the compaction roller from a central reference location for the ceramic matrix composite ply and extends at an approximate 45 ° angle toward a periphery of the ceramic matrix composite ply, the sweep being between a longitudinal axis of the layup tool and a transverse axis of the layup tool that intersect at the central reference location for the ceramic matrix composite ply. Optionally, the generating of the star-based path plan continues with additional sweeps of the compaction roller from the central reference location that extend toward the periphery of the ceramic matrix composite ply at various angles until the ceramic matrix composite ply is compacted on the layup tool.

As a further optional feature the orientation of the ceramic reinforcement fibers is not 90 °, the generating of the path plan further comprising generating a star-based path plan for the automated manipulation of the compaction roller that starts with a sweep of the compaction roller from a central reference location for the ceramic matrix composite ply and extends at an approximate 90 ° angle toward a periphery of the ceramic matrix composite ply, the sweep being along a longitudinal axis of the layup tool or a transverse axis of the layup tool, the longitudinal axis and the transverse axis intersecting at the central reference location for the ceramic matrix composite ply. Optionally, this may further involve generating of the star-based path plan that continues with additional sweeps of the compaction roller from the central reference location that extend toward the periphery of the ceramic matrix composite ply at various angles until the ceramic matrix composite ply is compacted on the layup tool. Optionally, where the maximum shear is not greater than the predetermined threshold, the generating of the path plan further comprises generating a grid-based path plan for the automated manipulation of the compaction roller, the grid-based path plan comprising sweeps of the compaction roller from a longitudinal axis of the ceramic matrix composite ply or a transverse axis of the ceramic matrix composite ply toward a periphery of the ceramic matrix composite ply, the sweeps initially starting from a central reference location for the ceramic matrix composite ply, the longitudinal axis and the transverse axis intersecting at the central reference location for the ceramic matrix composite ply. In addition, the generating of the grid-based path plan preferably continues with additional sweeps of the compaction roller along the longitudinal axis or the transverse axis, the additional sweeps being toward the periphery of the ceramic matrix composite ply from various locations along the longitudinal axis or the transverse axis until the ceramic matrix composite ply is compacted on the layup tool.

In another embodiment, the generating of the path plan may comprise identifying a maximum angle of distortion for the ceramic matrix composite ply based at least in part on the ply parametric data for the ceramic matrix composite ply, and comparing (404) the maximum angle of distortion to a predetermined threshold.

Optionally, the predetermined threshold comprises a range of angular measure. As a further option, the range of angular measure comprises at least one of approximately five degrees to approximately fifteen degrees, approximately six degrees to approximately fourteen degrees, approximately seven degrees to approximately thirteen degrees, approximately eight degrees to approximately twelve degrees and approximately nine degrees to approximately eleven degrees. Optionally, where the maximum angle of distortion is greater than the predetermined threshold, the generating of the path plan further comprises identifying an orientation of ceramic reinforcement fibers within the ceramic matrix composite ply in conjunction with placement of the ceramic matrix composite ply on the layup tool based at least in part on the ply parametric data for the ceramic matrix composite ply, and comparing the orientation of the ceramic reinforcement fibers to a 90 ° threshold. Optionally, where the orientation of the ceramic reinforcement fibers is 90 °, the generating of the path plan further comprises generating a star-based path plan for the automated manipulation of the compaction roller that starts with a sweep of the compaction roller from a central reference location for the ceramic matrix composite ply and extends at an approximate 45 ° angle toward a periphery of the ceramic matrix composite ply, the sweep being between a longitudinal axis of the layup tool and a transverse axis of the layup tool that intersect at the central reference location for the ceramic matrix composite ply, wherein preferably the generating of the star-based path plan continues with additional sweeps of the compaction roller from the central reference location that extend toward the periphery of the ceramic matrix composite ply at various angles until the ceramic matrix composite ply is compacted on the layup tool.

Optionally, where the orientation of the ceramic reinforcement fibers is not 90 °, the generating of the path plan further comprises generating a star-based path plan for the automated manipulation of the compaction roller that starts with a sweep of the compaction roller from a central reference location for the ceramic matrix composite ply and extends at an approximate 90 ° angle toward a periphery of the ceramic matrix composite ply, the sweep being along a longitudinal axis of the layup tool or a transverse axis of the layup tool, the longitudinal axis and the transverse axis intersecting at the central reference location for the ceramic matrix composite ply, wherein preferably the generating of the star-based path plan continues with additional sweeps of the compaction roller from the central reference location that extend toward the periphery of the ceramic matrix composite ply at various angles until the ceramic matrix composite ply is compacted on the layup tool.

As a further option, where the maximum angle of distortion is not greater than the predetermined threshold, the generating of the path plan further comprises generating a grid-based path plan for the automated manipulation of the compaction roller, the grid-based path plan comprising sweeps of the compaction roller from a longitudinal axis of the ceramic matrix composite ply or a transverse axis of the ceramic matrix composite ply toward a periphery of the ceramic matrix composite ply, the sweeps initially starting from a central reference location for the ceramic matrix composite ply, the longitudinal axis and the transverse axis intersecting at the central reference location for the ceramic matrix composite ply, wherein preferably the generating of the grid-based path plan continues with additional sweeps of the compaction roller along the longitudinal axis or the transverse axis, the additional sweeps being toward the periphery of the ceramic matrix composite ply from various locations along the longitudinal axis or the transverse axis until the ceramic matrix composite ply is compacted on the layup tool.

The method may further comprise at least temporarily storing the path plan in a path plan data file, the path plan data file tailored for compaction of the ceramic matrix composite ply on the layup tool using the compaction roller, further preferably comprising sending the path plan data file to a working path plan repository accessible to a path plan test bed, wherein the path plan test bed comprises the layup tool, the ceramic matrix composite ply placed on the layup tool, a test robot control system, a robotic arm controlled by the test robot control system and an end effector on the robotic arm, wherein the end effector comprises the compaction roller, running a compaction application program on the test robot control system of the path plan test bed, the compaction application program using the path plan data file from the working path plan repository to compact the ceramic matrix composite ply on the layup tool, and evaluating the compaction of the ceramic matrix composite ply on the layup tool to validate the path plan data file complies with predetermined requirements for the ceramic matrix composite ply and the layup tool.

As a further option the evaluating of the compaction comprises at least one of a visual inspection of the compaction, visual imaging of the compaction, analysis of the compaction and comparison of contours of the compacted ceramic matrix composite ply to contours of the layup tool, and/or, where the evaluating of the compaction is successful, the method further comprises sending the path plan data file to a validated path plan repository accessible to a cell robot control system of a composite manufacturing layup cell, the cell robot control system associated with the compaction roller, and/or, where the evaluating of the compaction is not successful, the method further comprises generating a revised path plan and a revised path plan data file by replacing portions of paths in which unacceptable conditions were identified with paths that use a back-and-forth yaw motion while advancing along the path, and running the compaction application program at the path plan test bed to evaluate the revised path plan data file.

Verifying the path plan data file complies with predetermined standards for such data files and complies with predetermined requirements for the ceramic matrix composite ply and the layup tool may be involved in the method, wherein preferably the verifying of the path plan data file comprises at least one of a visual inspection of the path plan data file, processing the path plan data file for syntax errors, processing the path plan data file to confirm compliance with ceramic matrix composite ply requirements and processing the path plan data file to confirm compliance with layup tool requirements, and/or, where the verifying of the path plan data file is successful, the method further comprises sending the path plan data file to a verified path plan repository accessible to a cell robot control system associated with the compaction roller, or, where the verifying of the path plan data file is not successful, the method further comprises generating a revised path plan and a revised path plan data file by replacing portions of paths in which unacceptable conditions were identified with paths that use a back-and-forth yaw motion while advancing along the path, and verifying the revised path plan data file complies with the predetermined standards for such data files and complies with the predetermined requirements for the ceramic matrix composite ply and the layup tool.

Validating the path plan data file complies with predetermined requirements for the ceramic matrix composite ply and the layup tool by running a compaction simulation application program on at least one computing device of a path planning development environment (1100), the at least one computing device having access to the path plan data file may be involved in the method, wherein preferably, where the validating of the path plan data file is successful, the method further comprises sending the path plan data file to a validated path plan repository accessible to a cell robot control system of a composite manufacturing layup cell, the cell robot control system associated with the compaction roller, or, where the validating of the path plan data file is not successful, the method further comprises generating a revised path plan and a revised path plan data file by replacing portions of paths in which unacceptable conditions were identified with paths that use a back-and-forth yaw motion while advancing along the path, and validating the revised path plan data file complies with the predetermined requirements for the ceramic matrix composite ply and the layup tool by running the compaction simulation application program.

Developing a path plan for rollout compaction of a composite ply during composite manufacturing involves a path planning development environment (1100). The path planning development environment (see Figs. 11-14) comprises at least one computing device (1104), comprising at least one processor (1106) and associated memory (1108), a network interface (1110) in operative communication with the at least one processor and a communication network, at least one application program storage device (1114) in operative communication with the at least one processor (1106), the at least one application program storage device (1118) storing a path planning application program (1116), and at least one data storage device in operative communication with the at least one processor, wherein the at least one processor (1106) and the network interface (1110) are configured to receive ply parametric data (1120) based on characteristics of a ceramic matrix composite ply (1122) for placement on a layup tool and subsequent compaction using a compaction roller during the composite manufacturing, wherein the at least one processor (1106) is configured to store the ply parametric data (1120) in the at least one data storage device, and wherein the at least one processor (1106) is configured to generate the path plan for automated manipulation of the compaction roller to compact the ceramic matrix composite ply (1122) on the layup tool based at least in part on the ply parametric data (1120).

Optionally, the at least one data storage device stores a ply list file identifying a plurality of ceramic matrix composite plies and an orientation list file identifying a plurality of orientations for the plurality of ceramic matrix composite plies, wherein the at least one processor is configured to select the ceramic matrix composite ply for which the path plan is to be developed from the plurality of ceramic matrix composite plies identified in the ply list file, and wherein the at least one processor is configured to select an orientation of the ceramic matrix composite ply from the plurality of orientations identified in the orientation list file, and/or the at least one data storage device stores a tool list file identifying a plurality of layup tools, wherein the at least one processor is configured to select the layup tool for which the path plan is to be developed from the plurality of layup tools identified in the tool list file.

The at least one processor and the network interface may be configured to receive tool design data providing dimensional characteristics of a working surface for the layup tool upon which the ceramic matrix composite ply is placed during the composite manufacturing, wherein the at least one processor is configured to store the tool design data in the at least one data storage device, and wherein the at least one processor is configured to generate the path plan for automated manipulation of the compaction roller based at least in part on the tool design data.

Optionally, the at least one processor and the network interface are configured to receive tool design data providing dimensional characteristics of a working surface for the layup tool upon which the ceramic matrix composite ply is placed during the composite manufacturing, and wherein, in conjunction with generation of the path plan, the at least one processor is configured to identify a maximum shear for the ceramic matrix composite ply based at least in part on the ply parametric data for the ceramic matrix composite ply, and compare the maximum shear to a predetermined threshold.

Preferably, in conjunction with the generation of the path plan, where the maximum shear is greater than the predetermined threshold, the at least one processor is configured to identify an orientation of ceramic reinforcement fibers within the ceramic matrix composite ply in conjunction with placement of the ceramic matrix composite ply on the layup tool based at least in part on the ply parametric data for the ceramic matrix composite ply, and compare the orientation of the ceramic reinforcement fibers to a 90 ° threshold, wherein preferably, in conjunction with the generation of the path plan, where the orientation of the ceramic reinforcement fibers is 90 °, the at least one processor is configured to generate a star-based path plan for the automated manipulation of the compaction roller that starts with a sweep of the compaction roller from a central reference location for the ceramic matrix composite ply and extends at an approximate 45 ° angle toward a periphery of the ceramic matrix composite ply, the sweep being between a longitudinal axis of the layup tool and a transverse axis of the layup tool that intersect at the central reference location for the ceramic matrix composite ply.

As a further advantageous option the at least one processor is configured to continue generating the star-based path plan with additional sweeps of the compaction roller from the central reference location that extend toward the periphery of the ceramic matrix composite ply at various angles until the ceramic matrix composite ply is compacted on the layup tool.

As an alternative step, in conjunction with the generation of the path plan, where the orientation of the ceramic reinforcement fibers is not 90 °, the at least one processor is configured to generate a star-based path plan for the automated manipulation of the compaction roller that starts with a sweep of the compaction roller from a central reference location for the ceramic matrix composite ply and extends at an approximate 90 ° angle toward a periphery of the ceramic matrix composite ply, the sweep being along a longitudinal axis of the layup tool or a transverse axis of the layup tool, the longitudinal axis and the transverse axis intersecting at the central reference location for the ceramic matrix composite ply, wherein preferably the at least one processor is configured to continue generating the star-based path plan with additional sweeps of the compaction roller from the central reference location that extend toward the periphery of the ceramic matrix composite ply at various angles until the ceramic matrix composite ply is compacted on the layup tool.

Advantageously, in conjunction with the generation of the path plan, where the maximum shear is not greater than the predetermined threshold, the at least one processor is configured to generate a grid-based path plan for the automated manipulation of the compaction roller, the grid-based path plan comprising sweeps of the compaction roller from a longitudinal axis of the ceramic matrix composite ply or a transverse axis of the ceramic matrix composite ply toward a periphery of the ceramic matrix composite ply, the sweeps initially starting from a central reference location for the ceramic matrix composite ply, the longitudinal axis and the transverse axis intersecting at the central reference location for the ceramic matrix composite ply, wherein preferably the at least one processor is configured to continue generating the grid-based path plan with additional sweeps of the compaction roller along the longitudinal axis or the transverse axis, the additional sweeps being toward the periphery of the ceramic matrix composite ply from various locations along the longitudinal axis or the transverse axis until the ceramic matrix composite ply is compacted on the layup tool.

Optionally, in conjunction with generation of the path plan, the at least one processor is configured to identify a maximum angle of distortion for the ceramic matrix composite ply based at least in part on the ply parametric data for the ceramic matrix composite ply, and compare the maximum angle of distortion to a predetermined threshold wherein preferably, in conjunction with the generation of the path plan, where the maximum angle of distortion is greater than the predetermined threshold, the at least one processor is configured to identify an orientation of ceramic reinforcement fibers within the ceramic matrix composite ply in conjunction with placement of the ceramic matrix composite ply on the layup tool based at least in part on the ply parametric data for the ceramic matrix composite ply, and compare the orientation of the ceramic reinforcement fibers to a 90 ° threshold, wherein preferably, in conjunction with the generation of the path plan, where the orientation of the ceramic reinforcement fibers is 90 °, the at least one processor is configured to generate a star-based path plan for the automated manipulation of the compaction roller that starts with a sweep of the compaction roller from a central reference location for the ceramic matrix composite ply and extends at an approximate 45 ° angle toward a periphery of the ceramic matrix composite ply, the sweep being between a longitudinal axis of the layup tool and a transverse axis of the layup tool that intersect at the central reference location for the ceramic matrix composite ply, wherein preferably the at least one processor is configured to continue generating the star-based path plan with additional sweeps of the compaction roller from the central reference location that extend toward the periphery of the ceramic matrix composite ply at various angles until the ceramic matrix composite ply is compacted on the layup tool.

Alternatively, in conjunction with the generation of the path plan, where the orientation of the ceramic reinforcement fibers is not 90 °, the at least one processor is configured to generate a star-based path plan for the automated manipulation of the compaction roller that starts with a sweep of the compaction roller from a central reference location for the ceramic matrix composite ply and extends at an approximate 90 ° angle toward a periphery of the ceramic matrix composite ply, the sweep being along a longitudinal axis of the layup tool or a transverse axis of the layup tool, the longitudinal axis and the transverse axis intersecting at the central reference location for the ceramic matrix composite ply, wherein preferably the at least one processor is configured to continue generating the star-based path plan with additional sweeps of the compaction roller from the central reference location that extend toward the periphery of the ceramic matrix composite ply at various angles until the ceramic matrix composite ply is compacted on the layup tool.

Optionally, in conjunction with the generation of the path plan, where the maximum angle of distortion is not greater than the predetermined threshold, the at least one processor is configured to generate a grid-based path plan for the automated manipulation of the compaction roller, the grid-based path plan comprising sweeps of the compaction roller from a longitudinal axis of the ceramic matrix composite ply or a transverse axis of the ceramic matrix composite ply toward a periphery of the ceramic matrix composite ply, the sweeps initially starting from a central reference location for the ceramic matrix composite ply, the longitudinal axis and the transverse axis intersecting at the central reference location for the ceramic matrix composite ply, wherein preferably the at least one processor is configured to continue generating the grid-based path plan with additional sweeps of the compaction roller along the longitudinal axis or the transverse axis, the additional sweeps being toward the periphery of the ceramic matrix composite ply from various locations along the longitudinal axis or the transverse axis until the ceramic matrix composite ply is compacted on the layup tool.

Advantageously, the at least one processor is configured to at least temporarily store the path plan in the at least one data storage device as a path plan data file, the path plan data file tailored for compaction of the ceramic matrix composite ply on the layup tool using the compaction roller, wherein optionally the at least one processor and the network interface are configured to send the path plan data file to a working path plan repository in at least one central storage device via the communication network, the working path plan repository being accessible to a path plan test bed, wherein the path plan test bed comprises the layup tool, the ceramic matrix composite ply placed on the layup tool, a test robot control system, a robotic arm controlled by the test robot control system and an end effector on the robotic arm, wherein the end effector comprises the compaction roller, wherein the test robot control system comprises at least one test processor and associated memory, a network interface in operative communication with the at least one test processor and at least one test program storage device in operative communication with the at least one test processor, the at least one test program storage device storing a compaction application program, wherein the at least one test processor is configured to run the compaction application program on the test robot control system of the path plan test bed, the compaction application program using the path plan data file from the working path plan repository to compact the ceramic matrix composite ply on the layup tool, and wherein the path plan test bed is configured for evaluating the compaction of the ceramic matrix composite ply on the layup tool to validate the path plan data file complies with predetermined requirements for the ceramic matrix composite ply and the layup tool.

Preferably, the layup tool comprises a working surface upon which the ceramic matrix composite ply is placed during the composite manufacturing, wherein optionally the working surface of the layup tool is three-dimensional, and/or wherein the working surface of the layup tool comprises at least one of a curved portion, a double curved portion, a contoured portion, a geometrically-shaped portion, a rising ramp portion, a falling ramp portion and a two-dimensional portion.

In an advantageous embodiment, the compaction roller comprises at least one of an approximately 7.6 cm (three inch) roller, a roller having a width ranging between approximately 5.0 cm (two inches) and approximately 10.1 cm (four inches), a roller having a width ranging between approximately 12.7 cm (five inches) and approximately 17.78 cm (seven inches), a roller having a width ranging between approximately 20.3 cm (eight inches) and approximately 25.4 cm (ten inches) and a roller having a width ranging between approximately 27.9 cm (eleven inches) and approximately 33.0 cm (thirteen inches), and/or wherein, where the evaluating of the compaction is successful, the test robot control system is configured to send the path plan data file from the working path plan repository to a validated path plan repository accessible to a cell robot control system of a composite manufacturing layup cell, the cell robot control system associated with the compaction roller.

Optionally, where the evaluating of the compaction is not successful, the test robot control system is configured to notify the at least one computing device of the path planning development environment that the evaluating of the compaction was not successful, wherein the at least one computing device is configured to run the path planning application program to generate a revised path plan and a revised path plan data file by replacing portions of paths in which unacceptable conditions were identified with paths that use a back-and-forth yaw motion while advancing along the path, wherein the at least one computing device is configured to send the revised path plan data file to the working path plan repository in the at least one central storage device via the communication network, and wherein the test robot control system is configured to run the compaction application program at the path plan test bed to evaluate the revised path plan data file.

Optionally, the at least one computing device is configured for verifying the path plan data file complies with predetermined standards for such data files and complies with predetermined requirements for the ceramic matrix composite ply and the layup tool, the at least one computing device having access to the path plan data file, wherein preferably, where the verifying of the path plan data file is successful, the at least one computing device is configured to send the path plan data file to a verified path plan repository accessible to a cell robot control system of a composite manufacturing layup cell, the cell robot control system associated with the compaction roller, or, where the verifying of the path plan data file is not successful, the at least one computing device is configured to generate a revised path plan and a revised path plan data file by replacing portions of paths in which unacceptable conditions were identified with paths that use a back-and-forth yaw motion while advancing along the path, and wherein the at least one computing device is configured to verify the revised path plan data file.

Optionally, the at least one computing device is configured for validating the path plan data file complies with predetermined requirements for the ceramic matrix composite ply and the layup tool by running a compaction simulation application program on the at least one computing device, the at least one computing device having access to the path plan data file, wherein preferably, where the validating of the path plan data file is successful, the at least one computing device is configured to send the path plan data file to a validated path plan repository accessible to a cell robot control system of a composite manufacturing layup cell, the cell robot control system associated with the compaction roller, wherein preferably, where the validating of the path plan data file is not successful, the at least one computing device is configured to generate a revised path plan and a revised path plan data file by replacing portions of paths in which unacceptable conditions were identified with paths that use a back-and-forth yaw motion while advancing along the path, and wherein the at least one computing device is configured to validate the revised path plan data file complies with predetermined requirements for the ceramic matrix composite ply and the layup tool by the at least one processor running the compaction simulation application program.

Developing a path plan for rollout compaction of a composite ply during composite manufacturing may involve a method that comprises selecting a ceramic matrix composite ply for which the path plan is to be developed from a plurality of ceramic matrix composite plies, selecting an orientation of the ceramic matrix composite ply from a plurality of orientations, selecting a layup tool for which the path plan is to be developed from a plurality of layup tools, receiving ply parametric data based on characteristics of the ceramic matrix composite ply for placement on the layup tool and subsequent compaction using a compaction roller during the composite manufacturing, receiving tool design data providing dimensional characteristics of a working surface for the layup tool, generating the path plan for automated manipulation of the compaction roller to compact the ceramic matrix composite ply on the layup tool based at least in part on the ply parametric data and the tool design data, at least temporarily storing the path plan in a path plan data file, sending the path plan data file to a working path plan repository accessible to a path plan test bed, wherein the path plan test bed comprises the layup tool, the ceramic matrix composite ply placed on the layup tool, a test robot control system, a robotic arm controlled by the test robot control system and an end effector on the robotic arm, wherein the end effector comprises the compaction roller, running a compaction application program on the test robot control system of the path plan test bed, the compaction application program using the path plan data file from the working path plan repository to compact the ceramic matrix composite ply on the layup tool, and evaluating the compaction of the ceramic matrix composite ply on the layup tool to validate the path plan data file complies with predetermined requirements for the ceramic matrix composite ply and the layup tool.

Optionally, the evaluating of the compaction comprises at least one of a visual inspection of the compaction, visual imaging of the compaction, analysis of the compaction and comparison of contours of the compacted ceramic matrix composite ply to contours of the layup tool, or, where the evaluating of the compaction is successful, the method further comprises sending the path plan data file to a validated path plan repository accessible to a cell robot control system of a composite manufacturing layup cell, the cell robot control system associated with the compaction roller, or, where the evaluating of the compaction is not successful, the method further comprising generating a revised path plan and a revised path plan data file by replacing portions of paths in which unacceptable conditions were identified with paths that use a back-and-forth yaw motion while advancing along the path, and running the compaction application program at the path plan test bed to evaluate the revised path plan data file.

The present disclosure also comprises a method, and a path planning development environment, for developing a path plan for rollout compaction of a composite ply during composite manufacturing, comprising: receiving ply parametric data based on characteristics of a ceramic matrix composite ply for placement on a layup tool and subsequent compaction using a compaction roller during the composite manufacturing; and generating the path plan for automated manipulation of the compaction roller to compact the ceramic matrix composite ply on the layup tool based at least in part on the ply parametric data, the generating of the path plan further comprising: receiving tool design data providing dimensional characteristics of a working surface for the layup tool upon which the ceramic matrix composite ply is placed during the composite manufacturing; identifying a maximum shear for the ceramic matrix composite ply based at least in part on the ply parametric data for the ceramic matrix composite ply and the tool design data; and comparing the maximum shear to a predetermined threshold, where the maximum shear is not greater than the predetermined threshold, the generating of the path plan further comprising: generating a grid-based path plan for the automated manipulation of the compaction roller, the grid-based path plan comprising sweeps of the compaction roller from a longitudinal axis of the ceramic matrix composite ply or a transverse axis of the ceramic matrix composite ply toward a periphery of the ceramic matrix composite ply, the sweeps initially starting from a central reference location for the ceramic matrix composite ply, the longitudinal axis and the transverse axis intersecting at the central reference location for the ceramic matrix composite ply.

Further, the present disclosure comprises a method, and a path planning development environment, for developing a path plan for rollout compaction of a composite ply during composite manufacturing, comprising: receiving ply parametric data based on characteristics of a ceramic matrix composite ply for placement on a layup tool and subsequent compaction using a compaction roller during the composite manufacturing; and generating the path plan for automated manipulation of the compaction roller to compact the ceramic matrix composite ply on the layup tool based at least in part on the ply parametric data, the generating of the path plan further comprising: identifying a maximum angle of distortion for the ceramic matrix composite ply based at least in part on the ply parametric data for the ceramic matrix composite ply; and comparing (404) the maximum angle of distortion to a predetermined threshold, where the maximum angle of distortion is greater than the predetermined threshold, the generating of the path plan further comprising: identifying an orientation of ceramic reinforcement fibers within the ceramic matrix composite ply in conjunction with placement of the ceramic matrix composite ply on the layup tool based at least in part on the ply parametric data for the ceramic matrix composite ply; and comparing the orientation of the ceramic reinforcement fibers to a 90 ° threshold, where the orientation of the ceramic reinforcement fibers is 90 °, the generating of the path plan further comprising: generating a star-based path plan for the automated manipulation of the compaction roller that starts with a sweep of the compaction roller from a central reference location for the ceramic matrix composite ply and extends at an approximate 45 ° angle toward a periphery of the ceramic matrix composite ply, the sweep being between a longitudinal axis of the layup tool and a transverse axis of the layup tool that intersect at the central reference location for the ceramic matrix composite ply, and/or comparing the orientation of the ceramic reinforcement fibers to a 90 ° threshold, where the orientation of the ceramic reinforcement fibers is not 90 °, the generating of the path plan further preferably comprising: generating a star-based path plan for the automated manipulation of the compaction roller that starts with a sweep of the compaction roller from a central reference location for the ceramic matrix composite ply and extends at an approximate 90 ° angle toward a periphery of the ceramic matrix composite ply, the sweep being along a longitudinal axis of the layup tool or a transverse axis of the layup tool, the longitudinal axis and the transverse axis intersecting at the central reference location for the ceramic matrix composite ply.

Even further, the present disclosure comprises a method, and a path planning development environment, for developing a path plan for rollout compaction of a composite ply during composite manufacturing, comprising: receiving ply parametric data based on characteristics of a ceramic matrix composite ply for placement on a layup tool and subsequent compaction using a compaction roller during the composite manufacturing; and generating the path plan for automated manipulation of the compaction roller to compact the ceramic matrix composite ply on the layup tool based at least in part on the ply parametric data, the generating of the path plan further comprising: identifying a maximum angle of distortion for the ceramic matrix composite ply based at least in part on the ply parametric data for the ceramic matrix composite ply; and comparing (404) the maximum angle of distortion to a predetermined threshold, where the maximum angle of distortion is not greater than the predetermined threshold, the generating of the path plan further comprising: generating a grid-based path plan for the automated manipulation of the compaction roller, the grid-based path plan comprising sweeps of the compaction roller from a longitudinal axis of the ceramic matrix composite ply or a transverse axis of the ceramic matrix composite ply toward a periphery of the ceramic matrix composite ply, the sweeps initially starting from a central reference location for the ceramic matrix composite ply, the longitudinal axis and the transverse axis intersecting at the central reference location for the ceramic matrix composite ply.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 100, 600, 700, 800, 900, 1000, 1600, path planning development environments 1100, central storage devices 1136 and path plan test beds 1138 for developing path plans for rollout compaction of composite plies during composite manufacturing have been shown and described, modifications may occur to those skilled in the art upon reading the specification. The present application includes such modifications and is limited only by the scope of the claims.

## Claims

1. A method for developing a path plan for rollout compaction of a composite ply during composite manufacturing, comprising:
receiving ply parametric data based on characteristics of a ceramic matrix composite ply for placement on a layup tool and subsequent compaction using a compaction roller during the composite manufacturing; and
generating the path plan for automated manipulation of the compaction roller to compact the ceramic matrix composite ply on the layup tool based at least in part on the ply parametric data, the generating of the path plan further comprising:
receiving tool design data providing dimensional characteristics of a working surface for the layup tool upon which the ceramic matrix composite ply is placed during the composite manufacturing;
identifying a maximum shear for the ceramic matrix composite ply based at least in part on the ply parametric data for the ceramic matrix composite ply and the tool design data; and
comparing the maximum shear to a predetermined threshold,
where the maximum shear is greater than the predetermined threshold, the generating of the path plan further comprising:
identifying an orientation of ceramic reinforcement fibers within the ceramic matrix composite ply in conjunction with placement of the ceramic matrix composite ply on the layup tool based at least in part on the ply parametric data for the ceramic matrix composite ply; and
comparing the orientation of the ceramic reinforcement fibers to a 90 ° threshold,
where the orientation of the ceramic reinforcement fibers is 90 °, the generating of the path plan further comprising:
generating a star-based path plan for the automated manipulation of the compaction roller that starts with a sweep of the compaction roller from a central reference location for the ceramic matrix composite ply and extends at an approximate 45 ° angle toward a periphery of the ceramic matrix composite ply, the sweep being between a longitudinal axis of the layup tool and a transverse axis of the layup tool that intersect at the central reference location for the ceramic matrix composite ply, and/or
comparing the orientation of the ceramic reinforcement fibers to a 90 ° threshold,
where the orientation of the ceramic reinforcement fibers is not 90 °, the generating of the path plan further comprising:
generating a star-based path plan for the automated manipulation of the compaction roller that starts with a sweep of the compaction roller from a central reference location for the ceramic matrix composite ply and extends at an approximate 90 ° angle toward a periphery of the ceramic matrix composite ply, the sweep being along a longitudinal axis of the layup tool or a transverse axis of the layup tool, the longitudinal axis and the transverse axis intersecting at the central reference location for the ceramic matrix composite ply.

2. The method of claim 1, wherein the ply parametric data comprise at least one of dimensional data for the ceramic matrix composite ply, geometric data for the ceramic matrix composite ply, materials data for the ceramic matrix composite ply, an orientation of ceramic reinforcement fibers in conjunction with placement on the layup tool, characteristics of interwoven fibers within the ceramic matrix composite ply, drapability characteristics of the ceramic matrix composite ply, a central reference location for the ceramic matrix composite ply, a longitudinal axis for the ceramic matrix composite ply intersecting the central reference location, a transverse axis for the ceramic matrix composite ply intersecting the central reference location, a maximum shear for the ceramic matrix composite ply, a maximum angle of distortion for the ceramic matrix composite ply and predetermined thresholds for the ceramic matrix composite ply relating to the ply parametric data, and/or
wherein the ceramic matrix composite ply comprises ceramic reinforcement fibers and a ceramic matrix,
wherein preferably the ceramic reinforcement fibers comprise at least one of carbon reinforcement fibers, silicon carbide reinforcement fibers, alumina reinforcement fibers and alumina silica reinforcement fibers,
wherein preferably the ceramic matrix comprises at least one of carbon material, silicon carbide material, alumina material and alumina silica material,
wherein preferably the ceramic matrix is deposited on the ceramic reinforcement fibers to form the ceramic matrix composite.

3. The method of any one of the foregoing claims, wherein the layup tool comprises a working surface upon which the ceramic matrix composite ply is placed during the composite manufacturing,
wherein preferably the working surface of the layup tool is three-dimensional,
wherein preferably the working surface of the layup tool comprises at least one of a curved portion, a double curved portion, a contoured portion, a geometrically-shaped portion, a rising ramp portion, a falling ramp portion and a two-dimensional portion.

4. The method of any one of the foregoing claims, wherein the compaction roller comprises at least one of an approximately 7.6 cm (three inch) roller, a roller having a width ranging between approximately 5.0 cm (two inches) and approximately 10.1 cm (four inches), a roller having a width ranging between approximately 12.7 cm (five inches) and approximately 17.78 cm (seven inches), a roller having a width ranging between approximately 20.3 cm (eight inches) and approximately 25.4 cm (ten inches) and a roller having a width ranging between approximately 27.9 cm (eleven inches) and approximately 33.0 cm (thirteen inches), and/or
wherein the compaction roller comprises an automated compaction roller, and/or wherein the compaction roller comprises at least a portion of an end effector for a robotic arm, and/or
wherein the composite manufacturing comprises ceramic matrix composite manufacturing, and/or
wherein the automated manipulation comprises maneuvering the compaction roller along the path plan using a robotic arm, the compaction roller being at least a portion of an end effector on the robotic arm, and/or
wherein the generating of the path plan is performed by at least one computing device using a path planning development environment to create a path plan data file tailored for compaction of the ceramic matrix composite ply on the layup tool using the compaction roller, and/or
further comprising:
selecting the ceramic matrix composite ply for which the path plan is to be developed from a plurality of ceramic matrix composite plies; and
selecting an orientation of the ceramic matrix composite ply from a plurality of orientations,
wherein preferably the plurality of orientations comprise at least one of a zero-degree orientation, a 45-degree orientation, a 60-degree orientation, a 90-degree orientation, a -45-degree orientation and a -60-degree orientation, and/or
further comprising:
selecting the layup tool for which the path plan is to be developed from a plurality of layup tools, and/or further comprising:
receiving tool design data providing dimensional characteristics of a working surface for the layup tool upon which the ceramic matrix composite ply is placed during the composite manufacturing, and
wherein the generating of the path plan for automated manipulation of the compaction roller is based at least in part on the tool design data,
wherein preferably the tool design data comprise at least one of a three-dimensional design model of the layup tool, a three-dimensional design model of a working surface of the layup tool, dimensional data for the working surface, geometric data for the working surface, contours of the working surface and characteristics of controllable features of the layup tool,
wherein preferably the controllable features of the layup tool comprise at least one of a vacuum feature, a pressurized air feature and a heating feature, and/or
wherein the predetermined threshold comprises a range of angular measure,
wherein preferably the range of angular measure comprises at least one of approximately five degrees to approximately fifteen degrees, approximately six degrees to approximately fourteen degrees, approximately seven degrees to approximately thirteen degrees, approximately eight degrees to approximately twelve degrees and approximately nine degrees to approximately eleven degrees, and/or
wherein the generating of the star-based path plan continues with additional sweeps of the compaction roller from the central reference location that extend toward the periphery of the ceramic matrix composite ply at various angles until the ceramic matrix composite ply is compacted on the layup tool, and/or
wherein the generating of the star-based path plan continues with additional sweeps of the compaction roller from the central reference location that extend toward the periphery of the ceramic matrix composite ply at various angles until the ceramic matrix composite ply is compacted on the layup tool.

5. The method of any one of the foregoing claims, where the maximum shear is not greater than the predetermined threshold, the generating of the path plan further comprising:
generating a grid-based path plan for the automated manipulation of the compaction roller, the grid-based path plan comprising sweeps of the compaction roller from a longitudinal axis of the ceramic matrix composite ply or a transverse axis of the ceramic matrix composite ply toward a periphery of the ceramic matrix composite ply, the sweeps initially starting from a central reference location for the ceramic matrix composite ply, the longitudinal axis and the transverse axis intersecting at the central reference location for the ceramic matrix composite ply,
wherein preferably the generating of the grid-based path plan continues with additional sweeps of the compaction roller along the longitudinal axis or the transverse axis, the additional sweeps being toward the periphery of the ceramic matrix composite ply from various locations along the longitudinal axis or the transverse axis until the ceramic matrix composite ply is compacted on the layup tool.

6. The method of any one of the foregoing claims, the generating of the path plan comprising:
identifying a maximum angle of distortion for the ceramic matrix composite ply based at least in part on the ply parametric data for the ceramic matrix composite ply; and
comparing (404) the maximum angle of distortion to a predetermined threshold, wherein preferably the predetermined threshold comprises a range of angular measure,
wherein preferably the range of angular measure comprises at least one of approximately five degrees to approximately fifteen degrees, approximately six degrees to approximately fourteen degrees, approximately seven degrees to approximately thirteen degrees, approximately eight degrees to approximately twelve degrees and approximately nine degrees to approximately eleven degrees,
where the maximum angle of distortion is greater than the predetermined threshold, the generating of the path plan further preferably comprising:
identifying an orientation of ceramic reinforcement fibers within the ceramic matrix composite ply in conjunction with placement of the ceramic matrix composite ply on the layup tool based at least in part on the ply parametric data for the ceramic matrix composite ply; and
comparing the orientation of the ceramic reinforcement fibers to a 90 ° threshold,
where the orientation of the ceramic reinforcement fibers is 90 °, the generating of the path plan further preferably comprising:
generating a star-based path plan for the automated manipulation of the compaction roller that starts with a sweep of the compaction roller from a central reference location for the ceramic matrix composite ply and extends at an approximate 45 ° angle toward a periphery of the ceramic matrix composite ply, the sweep being between a longitudinal axis of the layup tool and a transverse axis of the layup tool that intersect at the central reference location for the ceramic matrix composite ply,
wherein preferably the generating of the star-based path plan continues with additional sweeps of the compaction roller from the central reference location that extend toward the periphery of the ceramic matrix composite ply at various angles until the ceramic matrix composite ply is compacted on the layup tool,
where the orientation of the ceramic reinforcement fibers is not 90 °, the generating of the path plan further preferably comprising:
generating a star-based path plan for the automated manipulation of the compaction roller that starts with a sweep of the compaction roller from a central reference location for the ceramic matrix composite ply and extends at an approximate 90 ° angle toward a periphery of the ceramic matrix composite ply, the sweep being along a longitudinal axis of the layup tool or a transverse axis of the layup tool, the longitudinal axis and the transverse axis intersecting at the central reference location for the ceramic matrix composite ply,
wherein preferably the generating of the star-based path plan continues with additional sweeps of the compaction roller from the central reference location that extend toward the periphery of the ceramic matrix composite ply at various angles until the ceramic matrix composite ply is compacted on the layup tool,
where the maximum angle of distortion is not greater than the predetermined threshold, the generating of the path plan further preferably comprising:
generating a grid-based path plan for the automated manipulation of the compaction roller, the grid-based path plan comprising sweeps of the compaction roller from a longitudinal axis of the ceramic matrix composite ply or a transverse axis of the ceramic matrix composite ply toward a periphery of the ceramic matrix composite ply, the sweeps initially starting from a central reference location for the ceramic matrix composite ply, the longitudinal axis and the transverse axis intersecting at the central reference location for the ceramic matrix composite ply,
wherein preferably the generating of the grid-based path plan continues with additional sweeps of the compaction roller along the longitudinal axis or the transverse axis, the additional sweeps being toward the periphery of the ceramic matrix composite ply from various locations along the longitudinal axis or the transverse axis until the ceramic matrix composite ply is compacted on the layup tool.

7. The method of any one of the foregoing claims, further comprising:
at least temporarily storing the path plan in a path plan data file, the path plan data file tailored for compaction of the ceramic matrix composite ply on the layup tool using the compaction roller,
further preferably comprising:
sending the path plan data file to a working path plan repository accessible to a path plan test bed, wherein the path plan test bed comprises the layup tool, the ceramic matrix composite ply placed on the layup tool, a test robot control system, a robotic arm controlled by the test robot control system and an end effector on the robotic arm, wherein the end effector comprises the compaction roller;
running a compaction application program on the test robot control system of the path plan test bed, the compaction application program using the path plan data file from the working path plan repository to compact the ceramic matrix composite ply on the layup tool; and
evaluating the compaction of the ceramic matrix composite ply on the layup tool to validate the path plan data file complies with predetermined requirements for the ceramic matrix composite ply and the layup tool,
wherein preferably the evaluating of the compaction comprises at least one of a visual inspection of the compaction, visual imaging of the compaction, analysis of the compaction and comparison of contours of the compacted ceramic matrix composite ply to contours of the layup tool,
where the evaluating of the compaction is successful, the method further preferably comprising:
sending the path plan data file to a validated path plan repository accessible to a cell robot control system of a composite manufacturing layup cell, the cell robot control system associated with the compaction roller,
where the evaluating of the compaction is not successful, the method further preferably comprising:
generating a revised path plan and a revised path plan data file by replacing portions of paths in which unacceptable conditions were identified with paths that use a back-and-forth yaw motion while advancing along the path; and
running the compaction application program at the path plan test bed to evaluate the revised path plan data file,
further preferably comprising:
verifying the path plan data file complies with predetermined standards for such data files and complies with predetermined requirements for the ceramic matrix composite ply and the layup tool,
wherein preferably the verifying of the path plan data file comprises at least one of a visual inspection of the path plan data file, processing the path plan data file for syntax errors, processing the path plan data file to confirm compliance with ceramic matrix composite ply requirements and processing the path plan data file to confirm compliance with layup tool requirements,
where the verifying of the path plan data file is successful, the method further preferably comprising:
sending the path plan data file to a verified path plan repository accessible to a cell robot control system associated with the compaction roller,
where the verifying of the path plan data file is not successful, the method further preferably comprising:
generating a revised path plan and a revised path plan data file by replacing portions of paths in which unacceptable conditions were identified with paths that use a back-and-forth yaw motion while advancing along the path; and
verifying the revised path plan data file complies with the predetermined standards for such data files and complies with the predetermined requirements for the ceramic matrix composite ply and the layup tool,
further preferably comprising:
validating the path plan data file complies with predetermined requirements for the ceramic matrix composite ply and the layup tool by running a compaction simulation application program on at least one computing device of a path planning development environment (1100), the at least one computing device having access to the path plan data file,
where the validating of the path plan data file is successful, the method further preferably comprising:
sending the path plan data file to a validated path plan repository accessible to a cell robot control system of a composite manufacturing layup cell, the cell robot control system associated with the compaction roller,
where the validating of the path plan data file is not successful, the method further preferably comprising:
generating a revised path plan and a revised path plan data file by replacing portions of paths in which unacceptable conditions were identified with paths that use a back-and-forth yaw motion while advancing along the path; and
validating the revised path plan data file complies with the predetermined requirements for the ceramic matrix composite ply and the layup tool by running the compaction simulation application program.

8. A path planning development environment for developing a path plan for rollout compaction of a composite ply during composite manufacturing, the path planning development environment comprising:
at least one computing device, comprising:
at least one processor and associated memory;
a network interface in operative communication with the at least one processor and a communication network;
at least one application program storage device in operative communication with the at least one processor, the at least one application program storage device storing a path planning application program; and
at least one data storage device in operative communication with the at least one processor,
wherein the at least one processor and the network interface are configured to receive ply parametric data based on characteristics of a ceramic matrix composite ply for placement on a layup tool and subsequent compaction using a compaction roller during the composite manufacturing,
wherein the at least one processor is configured to store the ply parametric data in the at least one data storage device, and
wherein the at least one processor is configured to generate the path plan for automated manipulation of the compaction roller to compact the ceramic matrix composite ply on the layup tool based at least in part on the ply parametric data,
wherein the at least one processor and the network interface are configured to receive tool design data providing dimensional characteristics of a working surface for the layup tool upon which the ceramic matrix composite ply is placed during the composite manufacturing, and
wherein, in conjunction with generation of the path plan, the at least one processor is configured to:
identify a maximum shear for the ceramic matrix composite ply based at least in part on the ply parametric data for the ceramic matrix composite ply; and
compare the maximum shear to a predetermined threshold,
wherein, in conjunction with the generation of the path plan, where the maximum shear is greater than the predetermined threshold, the at least one processor is configured to:
identify an orientation of ceramic reinforcement fibers within the ceramic matrix composite ply in conjunction with placement of the ceramic matrix composite ply on the layup tool based at least in part on the ply parametric data for the ceramic matrix composite ply; and
compare the orientation of the ceramic reinforcement fibers to a 90 ° threshold, wherein, in conjunction with the generation of the path plan, where the orientation of the ceramic reinforcement fibers is 90 °, the at least one processor is configured to
generate a star-based path plan for the automated manipulation of the compaction roller that starts with a sweep of the compaction roller from a central reference location for the ceramic matrix composite ply and extends at an approximate 45 ° angle toward a periphery of the ceramic matrix composite ply, the sweep being between a longitudinal axis of the layup tool and a transverse axis of the layup tool that intersect at the central reference location for the ceramic matrix composite ply, and/or
compare the orientation of the ceramic reinforcement fibers to a 90 ° threshold,
wherein, in conjunction with the generation of the path plan, where the orientation of the ceramic reinforcement fibers is not 90 °, the at least one processor is configured to
generate a star-based path plan for the automated manipulation of the compaction roller that starts with a sweep of the compaction roller from a central reference location for the ceramic matrix composite ply and extends at an approximate 90 ° angle toward a periphery of the ceramic matrix composite ply, the sweep being along a longitudinal axis of the layup tool or a transverse axis of the layup tool, the longitudinal axis and the transverse axis intersecting at the central reference location for the ceramic matrix composite ply.

9. The path planning development environment of claim 8, wherein the at least one data storage device stores a ply list file identifying a plurality of ceramic matrix composite plies and an orientation list file identifying a plurality of orientations for the plurality of ceramic matrix composite plies,
wherein the at least one processor is configured to select the ceramic matrix composite ply for which the path plan is to be developed from the plurality of ceramic matrix composite plies identified in the ply list file, and
wherein the at least one processor is configured to select an orientation of the ceramic matrix composite ply from the plurality of orientations identified in the orientation list file, and/or
wherein the at least one data storage device stores a tool list file identifying a plurality of layup tools,
wherein the at least one processor is configured to select the layup tool for which the path plan is to be developed from the plurality of layup tools identified in the tool list file, and/or
wherein the at least one processor and the network interface are configured to receive tool design data providing dimensional characteristics of a working surface for the layup tool upon which the ceramic matrix composite ply is placed during the composite manufacturing,
wherein the at least one processor is configured to store the tool design data in the at least one data storage device, and
wherein the at least one processor is configured to generate the path plan for automated manipulation of the compaction roller based at least in part on the tool design data, and/or
wherein the at least one processor is configured to continue generating the star-based path plan with additional sweeps of the compaction roller from the central reference location that extend toward the periphery of the ceramic matrix composite ply at various angles until the ceramic matrix composite ply is compacted on the layup tool, and/or
wherein the at least one processor is configured to continue generating the star-based path plan with additional sweeps of the compaction roller from the central reference location that extend toward the periphery of the ceramic matrix composite ply at various angles until the ceramic matrix composite ply is compacted on the layup tool, and/or
wherein the compaction roller comprises at least one of an approximately 7.6 cm (three inch) roller, a roller having a width ranging between approximately 5.0 cm (two inches) and approximately 10.1 cm (four inches), a roller having a width ranging between approximately 12.7 cm (five inches) and approximately 17.78 cm (seven inches), a roller having a width ranging between approximately 20.3 cm (eight inches) and approximately 25.4 cm (ten inches) and a roller having a width ranging between approximately 27.9 cm (eleven inches) and approximately 33.0 cm (thirteen inches).

10. The path planning development environment of any one of the foregoing claims, wherein, in conjunction with the generation of the path plan, where the maximum shear is not greater than the predetermined threshold, the at least one processor is configured to generate a grid-based path plan for the automated manipulation of the compaction roller, the grid-based path plan comprising sweeps of the compaction roller from a longitudinal axis of the ceramic matrix composite ply or a transverse axis of the ceramic matrix composite ply toward a periphery of the ceramic matrix composite ply, the sweeps initially starting from a central reference location for the ceramic matrix composite ply, the longitudinal axis and the transverse axis intersecting at the central reference location for the ceramic matrix composite ply,
wherein preferably the at least one processor is configured to continue generating the grid-based path plan with additional sweeps of the compaction roller along the longitudinal axis or the transverse axis, the additional sweeps being toward the periphery of the ceramic matrix composite ply from various locations along the longitudinal axis or the transverse axis until the ceramic matrix composite ply is compacted on the layup tool.

11. The path planning development environment of any one of the foregoing claims wherein, in conjunction with generation of the path plan, the at least one processor is configured to:
identify a maximum angle of distortion for the ceramic matrix composite ply based at least in part on the ply parametric data for the ceramic matrix composite ply; and
compare the maximum angle of distortion to a predetermined threshold,
wherein preferably, in conjunction with the generation of the path plan, where the maximum angle of distortion is greater than the predetermined threshold, the at least one processor is configured to:
identify an orientation of ceramic reinforcement fibers within the ceramic matrix composite ply in conjunction with placement of the ceramic matrix composite ply on the layup tool based at least in part on the ply parametric data for the ceramic matrix composite ply; and
compare the orientation of the ceramic reinforcement fibers to a 90 ° threshold,
wherein preferably, in conjunction with the generation of the path plan, where the orientation of the ceramic reinforcement fibers is 90 °, the at least one processor is configured to generate a star-based path plan for the automated manipulation of the compaction roller that starts with a sweep of the compaction roller from a central reference location for the ceramic matrix composite ply and extends at an approximate 45 ° angle toward a periphery of the ceramic matrix composite ply, the sweep being between a longitudinal axis of the layup tool and a transverse axis of the layup tool that intersect at the central reference location for the ceramic matrix composite ply,
wherein preferably the at least one processor is configured to continue generating the star-based path plan with additional sweeps of the compaction roller from the central reference location that extend toward the periphery of the ceramic matrix composite ply at various angles until the ceramic matrix composite ply is compacted on the layup tool,
wherein preferably, in conjunction with the generation of the path plan, where the orientation of the ceramic reinforcement fibers is not 90 °, the at least one processor is configured to generate a star-based path plan for the automated manipulation of the compaction roller that starts with a sweep of the compaction roller from a central reference location for the ceramic matrix composite ply and extends at an approximate 90 ° angle toward a periphery of the ceramic matrix composite ply, the sweep being along a longitudinal axis of the layup tool or a transverse axis of the layup tool, the longitudinal axis and the transverse axis intersecting at the central reference location for the ceramic matrix composite ply,
wherein preferably the at least one processor is configured to continue generating the star-based path plan with additional sweeps of the compaction roller from the central reference location that extend toward the periphery of the ceramic matrix composite ply at various angles until the ceramic matrix composite ply is compacted on the layup tool,
wherein preferably, in conjunction with the generation of the path plan, where the maximum angle of distortion is not greater than the predetermined threshold, the at least one processor is configured to generate a grid-based path plan for the automated manipulation of the compaction roller, the grid-based path plan comprising sweeps of the compaction roller from a longitudinal axis of the ceramic matrix composite ply or a transverse axis of the ceramic matrix composite ply toward a periphery of the ceramic matrix composite ply, the sweeps initially starting from a central reference location for the ceramic matrix composite ply, the longitudinal axis and the transverse axis intersecting at the central reference location for the ceramic matrix composite ply,
wherein preferably the at least one processor is configured to continue generating the grid-based path plan with additional sweeps of the compaction roller along the longitudinal axis or the transverse axis, the additional sweeps being toward the periphery of the ceramic matrix composite ply from various locations along the longitudinal axis or the transverse axis until the ceramic matrix composite ply is compacted on the layup tool.

12. The path planning development environment of any one of the foregoing claims, wherein the at least one processor is configured to at least temporarily store the path plan in the at least one data storage device as a path plan data file, the path plan data file tailored for compaction of the ceramic matrix composite ply on the layup tool using the compaction roller,
wherein preferably the at least one processor and the network interface are configured to send the path plan data file to a working path plan repository in at least one central storage device via the communication network, the working path plan repository being accessible to a path plan test bed, wherein the path plan test bed comprises the layup tool, the ceramic matrix composite ply placed on the layup tool, a test robot control system, a robotic arm controlled by the test robot control system and an end effector on the robotic arm, wherein the end effector comprises the compaction roller,
wherein the test robot control system comprises at least one test processor and associated memory, a network interface in operative communication with the at least one test processor and at least one test program storage device in operative communication with the at least one test processor, the at least one test program storage device storing a compaction application program,
wherein the at least one test processor is configured to run the compaction application program on the test robot control system of the path plan test bed, the compaction application program using the path plan data file from the working path plan repository to compact the ceramic matrix composite ply on the layup tool, and
wherein the path plan test bed is configured for evaluating the compaction of the ceramic matrix composite ply on the layup tool to validate the path plan data file complies with predetermined requirements for the ceramic matrix composite ply and the layup tool,
wherein preferably the layup tool comprises a working surface upon which the ceramic matrix composite ply is placed during the composite manufacturing,
wherein preferably the working surface of the layup tool is three-dimensional,
wherein preferably the working surface of the layup tool comprises at least one of a curved portion, a double curved portion, a contoured portion, a geometrically-shaped portion, a rising ramp portion, a falling ramp portion and a two-dimensional portion.

13. The path planning development environment of claim 12, wherein, where the evaluating of the compaction is successful, the test robot control system is configured to send the path plan data file from the working path plan repository to a validated path plan repository accessible to a cell robot control system of a composite manufacturing layup cell, the cell robot control system associated with the compaction roller, or
wherein, where the evaluating of the compaction is not successful, the test robot control system is configured to notify the at least one computing device of the path planning development environment that the evaluating of the compaction was not successful,
wherein the at least one computing device is configured to run the path planning application program to generate a revised path plan and a revised path plan data file by replacing portions of paths in which unacceptable conditions were identified with paths that use a back-and-forth yaw motion while advancing along the path,
wherein the at least one computing device is configured to send the revised path plan data file to the working path plan repository in the at least one central storage device via the communication network, and
wherein the test robot control system is configured to run the compaction application program at the path plan test bed to evaluate the revised path plan data file.

14. The path planning development environment of claims 12 or 13, wherein the at least one computing device is configured for verifying the path plan data file complies with predetermined standards for such data files and complies with predetermined requirements for the ceramic matrix composite ply and the layup tool, the at least one computing device having access to the path plan data file,
wherein preferably, where the verifying of the path plan data file is successful, the at least one computing device is configured to send the path plan data file to a verified path plan repository accessible to a cell robot control system of a composite manufacturing layup cell, the cell robot control system associated with the compaction roller, or
wherein, where the verifying of the path plan data file is not successful, the at least one computing device is configured to generate a revised path plan and a revised path plan data file by replacing portions of paths in which unacceptable conditions were identified with paths that use a back-and-forth yaw motion while advancing along the path, and
wherein the at least one computing device is configured to verify the revised path plan data file.

15. The path planning development environment of claim 12, wherein the at least one computing device is configured for validating the path plan data file complies with predetermined requirements for the ceramic matrix composite ply and the layup tool by running a compaction simulation application program on the at least one computing device, the at least one computing device having access to the path plan data file,
wherein preferably, where the validating of the path plan data file is successful, the at least one computing device is configured to send the path plan data file to a validated path plan repository accessible to a cell robot control system of a composite manufacturing layup cell, the cell robot control system associated with the compaction roller, or
wherein, where the validating of the path plan data file is not successful, the at least one computing device is configured to generate a revised path plan and a revised path plan data file by replacing portions of paths in which unacceptable conditions were identified with paths that use a back-and-forth yaw motion while advancing along the path, and
wherein the at least one computing device is configured to validate the revised path plan data file complies with predetermined requirements for the ceramic matrix composite ply and the layup tool by the at least one processor running the compaction simulation application program.
